(19) Europäisches Patentamt
European Patent Office
Office européen des brevets

(11) **EP 2 813 802 B1**

(12) **EUROPÄISCHE PATENTSCHRIFT**

(45) Veröffentlichungstag und Bekanntmachung des Hinweises auf die Patenterteilung:
**23.10.2019  Patentblatt 2019/43**

(51) Int Cl.:
***G01B 9/02*** *(2006.01)*

(21) Anmeldenummer: **14169847.2**

(22) Anmeldetag: **26.05.2014**

(54) **Messeinrichtung**

Measurement device

Dispositif de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2013  DE 102013210999**

(43) Veröffentlichungstag der Anmeldung:
**17.12.2014  Patentblatt 2014/51**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**US-A1- 2003 053 073    US-A1- 2004 047 027**

EP 2 813 802 B1

**Beschreibung**

GEBIET DER TECHNIK

Die vorliegende Erfindung betrifft Messeinrichtungen, die zur hochpräzisen optischen Abstands- oder Positionsbestimmung geeignet sind.

STAND DER TECHNIK

Zur hochpräzisen optischen Abstands- oder Positionsbestimmung sind verschiedene Arten von Messeinrichtungen bekannt. Zum einen werden für die Abstandsbestimmung Interferometer ohne körperlich ausgebildete Maßverkörperungen genutzt; zum anderen dienen zur Positionsbestimmung interferentielle Positionsmesseinrichtungen mit körperlich ausgebildeten Maßverkörperungen.

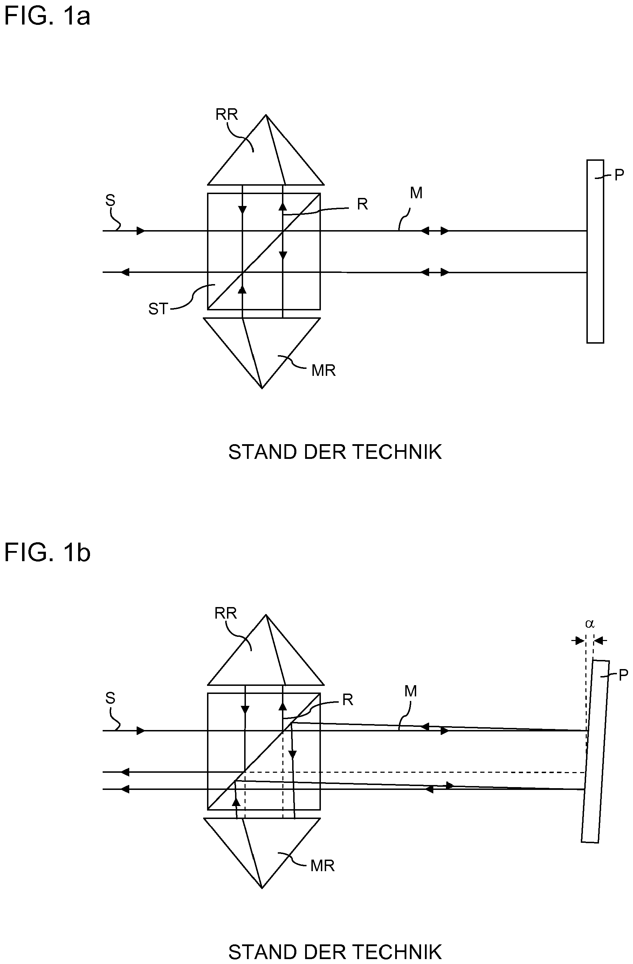

Im Fall der als Interferometer ausgebildeten Messeinrichtungen werden nachfolgend Probleme diskutiert, die insbesondere in Verbindung mit bekannten Planspiegel-Interferometern auftreten; derartige Planspiegel-Interferometer sind z.B. aus den Druckschriften US 4,693,605, US 5,064,289 US2004/047027 A1 oder US2003/053073 bekannt. In Figur 1a ist eine stark schematisierte Darstellung eines Planspiegel-Interferometers gemäß dem Stand der Technik gezeigt. Das von einer - nicht in Figur 1a dargestellten - Lichtquelle emittierte Strahlenbündel S wird z.B. über ein Aufspaltelement ST in Form eines polarisationsoptischen Strahlteilers, in zwei Teilstrahlenbündel aufgespalten; bei den beiden Teilstrahlenbündeln handelt es sich um ein Messstrahlenbündel M und ein Referenzstrahlenbündel R. Das Messstrahlenbündel M wird dann von einem optischen Funktionselement, das vorliegend als Messreflektor bzw. Planspiegel P ausgebildet ist, reflektiert und über das Aufspaltelement ST auf einen Mess-Retroreflektor MR gelenkt; dieser kann z.B. als Tripel-Prisma oder als Tripel-Spiegel ausgebildet sein. Der Mess-Retroreflektor MR bewirkt, dass das Messstrahlenbündel M genau entgegengesetzt wieder zurück zum Planspiegel P umgelenkt wird. Dort resultiert eine erneute Reflexion, bevor das Messstrahlenbündel M zurück in Richtung Aufspaltelement ST propagiert, wo es zur interferierenden Überlagerung mit dem Referenzstrahlenbündel R kommt, das vorher über einen Referenz-Retroreflektor RR umgelenkt wurde. Dem Aufspaltelement ST ist ausgangsseitig eine - ebenfalls in Figur 1a nicht gezeigte - Detektoranordnung nachgeordnet. Über die Detektoranordnung ist ein phasencodiertes Messsignal aus den überlagerten Teilstrahlenbündeln erzeugbar, das ein Maß für den Abstand des Planspiegels P von den restlichen Komponenten des Interferometers darstellt.

Selbst wenn der Planspiegel P nunmehr gemäß Figur 1b um einen Winkel $\alpha$ gegenüber seiner Solllage leicht verkippt wird, verläuft das Messstrahlenbündel M nach der zweiten Reflexion am Planspiegel P exakt anti-parallel zum ursprünglich einfallenden Strahlenbündel S vor der ersten Reflexion am Planspiegel P. Auf diese Art und Weise kann das Messstrahlenbündel M nachfolgend im Strahlteiler ST mit dem Referenzstrahlenbündel R überlagert werden, ohne dass eine Winkel- bzw. Richtungsscherung auftritt. Allerdings wird das Messstrahlenbündel M durch eine kleine Verkippung des Planspiegels P seitlich verschoben, so dass das Messstrahlenbündel und das Referenzstrahlenbündel nach deren Wiedervereinigung nicht mehr über den ganzen Strahlquerschnitt überlagert werden, d.h. es resultiert eine Ortsscherung in Bezug auf die an der Signalerzeugung beteiligten Strahlenbündel. Die Interferenz tritt deshalb nur im verkleinerten Überlappbereich auf, als Konsequenz hieraus reduziert sich die resultierende Amplitude bzw. der Modulationsgrad der derart erzeugten, phasencodierten Messsignale.

Für eine vorgegebene Kipptoleranz des Planspiegels P muss daher ein minimaler Strahlquerschnitt des Strahlenbündels S vorgesehen werden, um den derart bedingten Signalabfall zu begrenzen. Dieser Zusammenhang wird für ein Gauß-förmiges Strahlenbündel S, das von einer als Laser ausgebildeten Lichtquelle emittiert wird, durch folgende Gleichungen (1a) bzw. (1b) beschrieben:

$$\eta = e^{-8 \cdot \left(\frac{L_{Max} \cdot \alpha_{Max}}{w}\right)^2} \quad \text{(Gl. 1a)}$$

bzw.

$$w = \frac{2\sqrt{2} \cdot L_{Max} \cdot \alpha_{Max}}{\sqrt{\ln(\eta^{-1})}} \quad \text{(Gl. 1b)}$$

mit

$L_{Max}$   := maximaler Abstand des Planspiegels vom Mess-Retroreflektor

$\alpha_{Max}$ := maximaler Kippwinkel des Planspiegels
w := $1/e^2$ - Strahlquerschnitt des Strahlenbündels
$\eta$ := minimal zulässiger Signalpegel relativ zum Signalpegel bei nicht gekipptem Planspiegel

Mit $L_{Max}$ = 2m, $\alpha_{Max}$ = 1mrad und $\eta$ = 0.7 (Signalabfall auf 70%) ergibt sich ein minimaler Strahlquerschnitt w des Strahlenbündels S gemäß w = 9.5mm. Da die Wellenfront des Strahlenbündels S über den Strahlquerschnitt hinweg sehr eben sein muss (typische Anforderung: $\lambda/10$), benötigt man zur Kollimation des Strahlenbündels S eine entsprechend aufwändige und teure Kollimationsoptik, ohne dass sich hierbei ein erheblicher Signalabfall völlig vermeiden lässt. Ein derartiger Signalabfall führt zu einer Verringerung der Genauigkeit bei der Abstandsbestimmung mittels des Interferometers und zu einem erhöhten Signal-Rauschen in den erzeugten Messsignalen. Weiterhin ist natürlich auch die kleine Kipptoleranz des Planspiegels P störend, wenn man berücksichtigt, dass diese sowohl die Montage- als auch die Betriebstoleranz umfasst.

Ähnliche Probleme resultieren auch bei den eingangs erwähnten interferentiellen Positionsmesseinrichtungen mit körperlich ausgebildeten Maßverkörperungen. Auch hier beeinträchtigt die Verkippung optischer Funktionselemente im Abtaststrahlengang aus ihrer Solllage die erzeugten Messsignale negativ. Die entsprechenden Positionsmesseinrichtungen umfassen üblicherweise als optisches Funktionselement eine Maßverkörperung; relativ beweglich hierzu entlang mindestens einer Messrichtung ist eine Abtasteinheit mit verschiedenen weiteren optischen Komponenten vorgesehen, wie z.B. einer Lichtquelle, einem Aufspaltelement, einem Retroreflektor und einer Detektoranordnung. Besonders sensibel reagieren solche Positionsmesseinrichtungen auf Kippungen von Abtasteinheit und/oder Maßverkörperung um eine Normale auf die Maßverkörperung; eine derartige Kippung sei nachfolgend als Moire-Kippung bezeichnet. Aufgrund der in diesen Vorrichtungen auf Seiten der Abtasteinheit oftmals vorgesehenen Retroreflektoren lässt sich eine Winkel- bzw. Richtungsscherung der interferierenden Teilstrahlenbündel minimieren; es verbleibt jedoch eine Ortsscherung der aufgespaltenen Teilstrahlenbündel, die den maximal zulässigen Moire-Kippwinkel begrenzt. Der maximal zulässige Moire-Kippwinkel ist für diese Art bekannter Messeinrichtungen dadurch üblicherweise deutlich kleiner als die maximal zulässigen Kippwinkel um die beiden restlichen Kippachsen, nämlich um die die sog. Rollachse und die sog. Kippachse.

## ZUSAMMENFASSUNG DER ERFINDUNG

Der vorliegenden Erfindung liegt die Aufgabe zugrunde, eine Messeinrichtung zur hochpräzisen optischen Abstands- oder Positionsbestimmung zu schaffen, die möglichst unempfindlich gegenüber Verkippungen optischer Funktionselemente ist. Im Fall von Planspiegel-Interferometern soll hierbei insbesondere eine Kippung des Planspiegels weder eine Richtungs- noch eine Ortsscherung des Messstrahlenbündels verursachen. In interferentiellen Positionsmesseinrichtungen mit körperlich ausgebildeten Maßverkörperungen sollen insbesondere bei Moire-Kippungen der Maßverkörperung keine Richtungs- oder Ortsscherungen auftreten, um möglichst hohe Kipptoleranzen um alle Kippachsen zu gewährleisten.

Diese Aufgabe wird erfindungsgemäß durch eine Messeinrichtung mit den Merkmalen des Anspruchs 1 gelöst.

Desweiteren wird diese Aufgabe erfindungsgemäß durch eine Messeinrichtung mit den Merkmalen des Anspruchs 2 gelöst.

Vorteilhafte Ausführungen der erfindungsgemäßen Messeinrichtungen ergeben sich aus den Maßnahmen, die in den abhängigen Ansprüchen aufgeführt sind.

Eine erste Variante der erfindungsgemäßen Messeinrichtung zur hochpräzisen optischen Abstands- oder Positionsbestimmung umfasst eine Lichtquelle, mindestens ein optisches Funktionselement in Form eines Planspiegels und eine Detektoranordnung. Es erfolgt eine Erzeugung von mindestens zwei Teilstrahlenbündeln, von denen zumindest eines das Funktionselement drei Mal beaufschlagt, bevor die Teilstrahlenbündel interferierend überlagert in Richtung der Detektoranordnung propagieren, über die mindestens ein phasencodiertes Messsignal aus den überlagerten Teilstrahlenbündeln erzeugbar ist. Das Teilstrahlenbündel durchläuft zwischen dem Beaufschlagen des optischen Funktionselements mindestens zwei Abbildungselemente, wobei die Abbildungselemente Abbildungsfaktoren dergestalt aufweisen, dass keine Orts- und Richtungsscherung der interferierenden Teilstrahlenbündel bei einer Verkippung des optischen Funktionselements aus seiner Solllage resultiert und wobei dass die Abbildungselemente derart ausgebildet sind, dass darüber ein Versatz der ausfallenden Teilstrahlenbündel gegenüber den einfallenden Strahlenbündeln resultiert.

Eine zweite Variante der erfindungsgemäßen Messeinrichtung zur hochpräzisen optischen Abstands- oder Positionsbestimmung umfasst eine Lichtquelle, mindestens ein optisches Funktionselement in Form einer Maßverkörperung und eine Detektoranordnung. Es erfolgt eine Erzeugung von mindestens zwei Teilstrahlenbündeln, von denen zumindest eines das Funktionselement drei Mal beaufschlagt, bevor die Teilstrahlenbündel interferierend überlagert in Richtung der Detektoranordnung propagieren, über die mindestens ein phasencodiertes Messsignal aus den überlagerten Teilstrahlenbündeln erzeugbar ist. Das Teilstrahlenbündel durchläuft zwischen dem Beaufschlagen des optischen Funktionselements mindestens zwei Abbildungselemente, wobei die Abbildungselemente Abbildungsfaktoren dergestalt aufweisen, dass keine Orts- und Richtungsscherung der interferierenden Teilstrahlenbündel bei einer Verkippung des optischen Funktionselements aus seiner Solllage resultiert.

Die folgenden Bedingungen gelten für die Abbildungsfaktoren $m_n$ der N Abbildungselemente N = 2:

$$m_1 = -2, m_2 = -\tfrac{1}{2}$$

mit:

n := 1 ...N
N:= 2, 3; Zahl der Abbildungselemente
$m_n$:= Abbildungsfaktor des n-ten Abbildungselements

Es kann vorgesehen sein, dass die Abbildungselemente als Kombination aus mindestens einer Linse und einem Spiegel ausgebildet sind.

Dabei kann die mindestens eine Linse als diffraktive Linse ausgebildet sein.

Ferner kann das Abbildungselement zwei Linsen umfassen, die unterschiedliche Brennweiten aufweisen und die derart angeordnet sind, dass ein auf die erste Linse einfallendes, kollimiertes Teilstrahlenbündel nach dem Durchlaufen der zweiten Linse wiederum kollimiert weiterpropagiert.

Es ist desweiteren möglich, dass die Aufspaltung in zwei Teilstrahlenbündel über ein Aufspaltelement oder über die Lichtquelle erfolgt.

In einer vorteilhaften Ausführungsform kann vorgesehen sein, dass eine Übertragung der interferierend überlagerten Teilstrahlenbündel zur nachgeordneten Detektoranordnung über ein oder mehrere Lichtleitfasern erfolgt.

In der ersten Variante der erfindungsgemäßen Messeinrichtung ist der Planspiegel im Messarm eines Interferometers angeordnet und erfährt eine mindestens dreimalige Beaufschlagung durch ein Messstrahlenbündel.

In dieser Variante kann desweiteren vorgesehen sein, dass das Messstrahlenbündel senkrecht auf den Planspiegel einfällt.

In der zweiten Variante der erfindungsgemäßen Messeinrichtung kann vorgesehen sein, dass die Maßverkörperung eine mindestens dreimalige Beaufschlagung durch zwei Teilstrahlenbündel einer interferentiellen Positionsmesseinrichtung erfährt.

Schließlich ist es in dieser Variante möglich, dass die Abbildungselemente derart ausgebildet sind, dass darüber ein Versatz der ausfallenden Teilstrahlenbündel gegenüber den einfallenden Teilstrahlenbündeln resultiert.

Als wichtiger Vorteil der erfindungsgemäßen Lösungen ergibt sich, dass nunmehr deutlich größere Kipptoleranzen für optische Funktionselemente vorliegen. Der Anbau bzw. die Montage der erfindungsgemäßen Messeinrichtungen ist dadurch deutlich einfacher möglich.

Gleichzeitig resultiert trotz der hohen Kipptoleranzen kein Signaleinbruch in den erzeugten Messsignalen. Die Genauigkeit der Messsignale ist gleichbleibend hoch, deren Positionsrauschen niedrig.

Im Fall von als Interferometer ausgebildeten Messeinrichtungen kann zudem der Strahlquerschnitt des von der Lichtquelle emittierten Strahlbündels deutlich kleiner gewählt werden als im Stand der Technik. Entsprechend kompakter und demzufolge weniger aufwendig kann die erforderliche Kollimationsoptik ausgebildet werden.

Weitere Einzelheiten und Vorteile der vorliegenden Erfindung seien anhand der nachfolgenden Beschreibung von Ausführungsbeispielen der erfindungsgemäßen Vorrichtungen in Verbindung mit den Figuren erläutert.

## KURZE BESCHREIBUNG DER ZEICHNUNGEN

Es zeigt

Figur 1a den Strahlengangverlauf in einer als Planspiegel-Interferometer ausgebildeten Messeinrichtung gemäß dem Stand der Technik;

Figur 1b den Strahlengangverlauf in der Messeinrichtung aus Figur 1a bei einer Verkippung des Planspiegels;

Figur 2 eine schematisierte Darstellung des Strahlengangs des Messstrahlenbündels in einer als Planspiegel-Interferometer ausgebildeten Messeinrichtung gemäß dem Stand der Technik;

Figur 3 eine schematisierte Darstellung des Strahlengangs des Messstrahlenbündels in einer als Planspiegel-Interferometer ausgebildeten Variante der erfindungsgemäßen Messeinrichtung;

Figur 4          eine graphische Darstellung von Lösungen für Abbildungsfaktoren im Fall dreier verwendeter Abbildungselemente;

Figur 5          eine schematisierte Darstellung des Strahlengangs des Messstrahlenbündels in einer als Planspiegel-Interferometer ausgebildeten Variante der erfindungsgemäßen Messeinrichtung mit N = 2 Abbildungselementen und $m_1 = -2$, $m_2 = -1/2$;

Figur 6          eine schematisierte Darstellung des Strahlengangs des Messstrahlenbündels in einer als Planspiegel-Interferometer ausgebildeten Variante einer nicht beanspruchten Messeinrichtung mit N = 3 Abbildungselementen und $m_1 = m_3 = -1$, $m_2 = +1$;

Figur 7a - 7e    jeweils eine mögliche Ausführungsform eines Abbildungselements;

Figur 8          eine schematisierte Darstellung des Abtaststrahlengangs in einer als interferentielle Positionsmesseinrichtung mit Maßverkörperung ausgebildeten Variante der erfindungsgemäßen Messeinrichtung;

Figur 9a         eine schematisierte Darstellung des vollständigen Strahlengangs in einem ersten Ausführungsbeispiel einer als Planspiegel-Interferometer ausgebildeten Variante der erfindungsgemäßen Messeinrichtung in der xz-Ebene;

Figur 9b         eine schematisierte Darstellung des Strahlengangs im ersten Ausführungsbeispiel der erfindungsgemäßen Messeinrichtung in einer ersten xz-Ebene;

Figur 9c         eine schematisierte Darstellung des Strahlengangs im ersten Ausführungsbeispiel der

Figur 10a, 10b   erfindungsgemäßen Messeinrichtung in einer zweiten xz-Ebene; jeweils eine schematisierte Darstellung des Strahlengangs im ersten Ausführungsbeispiel der erfindungsgemäßen Messeinrichtung in unterschiedlichen Schnittdarstellungen;

Figur 11         eine schematisierte Darstellung des vollständigen Strahlengangs in einem zweiten Ausführungsbeispiel einer als Planspiegel-Interferometer ausgebildeten Variante der erfindungsgemäßen Messeinrichtung in der xz-Ebene;

Figur 12         eine schematisierte Darstellung des vollständigen Strahlengangs in einem dritten Ausführungsbeispiel einer als Planspiegel-Interferometer ausgebildeten Variante einer nicht beanspruchten Messeinrichtung in der xz-Ebene;

Figur 13a, 13b   jeweils eine schematisierte Darstellung eines Teilabtaststrahlengangs in einem vierten Ausführungsbeispiel einer als interferentielle Positionsmesseinrichtung mit Maßverkörperung ausgebildeten Variante der erfindungsgemäßen Messeinrichtung;

Figur 14         eine Darstellung des Abtaststrahlengangs im vierten Ausführungsbeispiel in einer anderen Ansicht;

Figur 15a, 15b   jeweils eine schematisierte Darstellung der Teilabtaststrahlengangs in einem fünften Ausführungsbeispiel einer als interferentielle Positionsmesseinrichtung mit Maßverkörperung ausgebildeten Variante einer nicht beanspruchten Messeinrichtung;

Figur 16         eine Darstellung des Abtaststrahlengangs im fünften Ausführungsbeispiel in einer anderen Ansicht;

## BESCHREIBUNG DER AUSFÜHRUNGSFORMEN

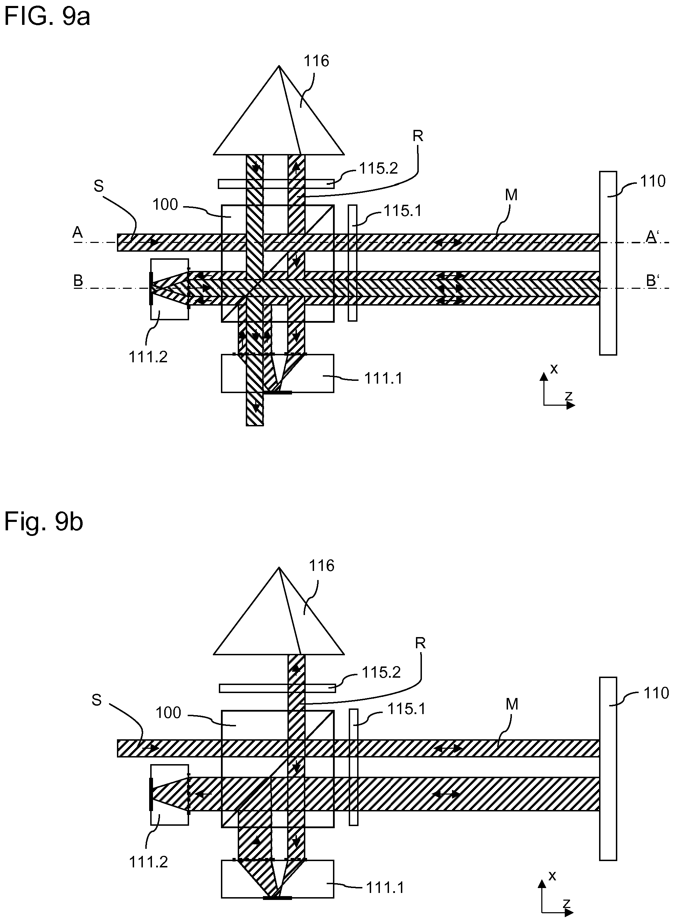

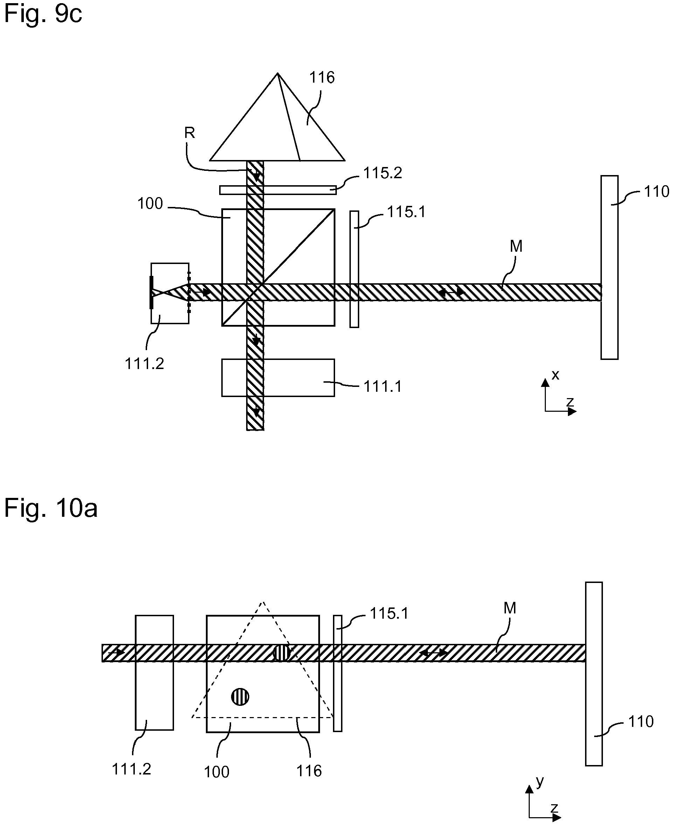

Bevor einzelne Varianten bzw. Ausführungsbeispiele der erfindungsgemäßen Messeinrichtungen anhand der Figuren 9a - 16 im Detail beschrieben werden, seien zunächst grundsätzliche theoretische Aspekte der vorliegenden Erfindung erörtert. Zunächst werden hierbei Messeinrichtungen diskutiert, die als Interferometer ausgebildet sind, nachfolgend Messeinrichtungen, die als interferentielle Positionsmesseinrichtungen mit Maßverkörperungen ausgebildet sind.

Interferometer

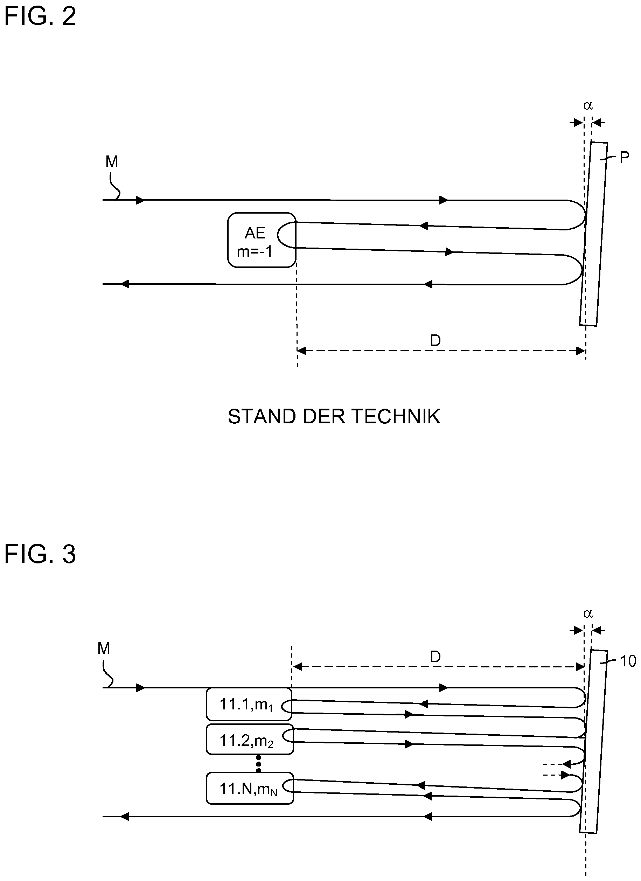

In den eingangs diskutierten Planspiegel-Interferometern ist üblicherweise im Messarm mindestens ein Retroreflektor vorgesehen. Ein Retroreflektor kann in einem Interferometer auf verschiedenste Art und Weise ausgebildet werden, beispielsweise als Tripelspiegel, als Tripelprisma oder als Kombination einer Linse mit einem Spiegel, der in der Brennebene der Linse angeordnet ist. All diese Retroreflektor-Varianten bewirken eine antiparallele Rückreflexion eines darauf einfallenden Strahlenbündels. Aus der Retroreflektor-Variante mit Linse und Spiegel ist anschaulich verständlich, dass Retroreflektoren grundsätzlich als optische Abbildungselemente mit dem Abbildungsfaktor m = -1 betrachtet werden können, deren Objekt- und Bildebenen jeweils im Unendlichen liegen. Durch die Lage der Objekt- und Bildebenen im Unendlichen werden kollimierte Strahlenbündel wieder in kollimierte Strahlenbündel überführt. Eine schematisierte Darstellung des Strahlengangs eines aus einer Strahlaufspaltung resultierenden Teilstrahlenbündels in einem Interferometer, respektive in einem Planspiegelinterferometer, gemäß dem Stand der Technik kann daher gemäß Figur 2 erfolgen; gezeigt ist hierbei der Strahlengang des Messstrahlenbündels M, das aus einer geeigneten Aufspaltung resultiert. Das Messstrahlenbündel M trifft im Messarm des Interferometers auf ein optisches Funktionselement in Form eines Messreflektors bzw. Planspiegels P, wird davon reflektiert und propagiert über die Distanz D zurück zum Abbildungselement AE mit dem Abbildungsfaktor m = -1, trifft erneut auf den Planspiegel P und propagiert nach einer erneuten Reflexion dann antiparallel zum ursprünglich einfallenden Messstrahlenbündel M zurück.

In der entsprechend ausgebildeten Ausführungsform der Messeinrichtung gemäß der schematischen Strahlengangdarstellung in Figur 3 sind nunmehr mindestens drei Reflexionen des im Messarm propagierenden Messstrahlenbündels M am Funktionselement 10 bzw. Planspiegel vorgesehen. Zwischen aufeinanderfolgenden Reflexionen wird vom Messstrahlenbündel M jeweils ein Abbildungselement 11.n (n = 1, 2,...N) mit dem Abbildungsfaktor $m_n$ durchlaufen, das das Messstrahlenbündel M jeweils zurück zum Funktionselement 10 lenkt. Im Fall einer insgesamt dreimaligen Beaufschlagung des Funktionselements 10 sind somit N = 2 Abbildungselemente 11.1, 11.2 vorgesehen, die zwischen dem Beaufschlagen des Funktionselements 10 durchlaufen werden; dies bedeutet, dass zwischen dem ersten und zweiten Beaufschlagen des Funktionselements 10 ein erstes Abbildungselement 11.1 durchlaufen wird und zwischen dem zweiten und dritten Beaufschlagen des Funktionselements 10 ein zweites Abbildungselement 11.2.

Die Berechnung bzw. Bestimmung der optimalen Abbildungsfaktoren $m_n$ der verwendeten Abbildungselemente 11.n kann mit Hilfe von Raytracing-Verfahren erfolgen, wobei man sich hier auf zwei Dimensionen (x, z) senkrecht zu einer Kippachse des Planspiegels des Funktionselements 10 beschränken kann. Jedes Segment des Strahlenganges des Messstrahlenbündels M wird durch einen entsprechend vereinfachten Strahlvektor $\vec{s}$ beschrieben:

$$\vec{s} = \begin{pmatrix} x \\ kx \end{pmatrix} \qquad \text{(Gl. 2)}$$

mit:

x := Strahlort
kx : x-Komponente des k-Vektors:

Das einfallende Messstrahlenbündel M, dargestellt als $\vec{s}_0 = \begin{pmatrix} 0 \\ 0 \end{pmatrix}$, wird am verkippten Planspiegel bzw. Funktionselement 10 abgelenkt ($k_0 = 2\pi/\lambda$), das resultierende Messstrahlenbündel M lässt sich darstellen als:

$$\vec{s}_1 = \vec{s}_0 + \begin{pmatrix} 0 \\ 2 \cdot \alpha \cdot k_0 \end{pmatrix} \quad \text{(Gl. 3)}$$

Anschließend propagiert das Messstrahlenbündel M dann über die Distanz D zum ersten Abbildungselement 11.1, was durch eine Matrixmultiplikation beschrieben wird:

$$\vec{s}_2 = \begin{pmatrix} 1 & \frac{D}{k_0} \\ 0 & 1 \end{pmatrix} \cdot \vec{s}_1 \qquad \text{(Gl. 4)}$$

Das Abbildungselement 11.1 wird ebenfalls durch eine Matrixmultiplikation beschrieben, wobei zu beachten ist, dass der Abbildungsfaktor $m_1$ für den Strahlort und derjenige für die kx-Komponente invers zueinander sind:

$$\vec{s}_3 = \begin{pmatrix} m_1 & 0 \\ 0 & 1/m_1 \end{pmatrix} \cdot \vec{s}_2 \quad \text{(Gl. 5)}$$

Anschließend propagiert das Messstrahlenbündel M wieder zurück zum Funktionselement 10:

$$\vec{s}_4 = \begin{pmatrix} 1 & \frac{D}{k_0} \\ 0 & 1 \end{pmatrix} \cdot \vec{s}_3 \qquad \text{(Gl. 6)}$$

Der weitere Strahlenverlauf gemäß Figur 3 mit insgesamt N + 1 erfolgenden Reflexionen am Funktionselement 10 wird durch weitere Transformationen analog zu den Gleichungen 3 - 6 beschrieben, so dass die Gleichungen 3 - 6 (jeweils mit unterschiedlichen Abbildungsfaktoren $m_n$) insgesamt N mal angewandt werden:

$$\vec{s}_5 = \vec{s}_4 + \begin{pmatrix} 0 \\ 2 \cdot \alpha \cdot k_0 \end{pmatrix}, \ \vec{s}_6 = \begin{pmatrix} 1 & \frac{D}{k_0} \\ 0 & 1 \end{pmatrix} \cdot \vec{s}_5, \ \vec{s}_7 = \begin{pmatrix} m_2 & 0 \\ 0 & 1/m_2 \end{pmatrix} \cdot \vec{s}_6, \ \vec{s}_8 = \begin{pmatrix} 1 & \frac{D}{k_0} \\ 0 & 1 \end{pmatrix} \cdot$$
$$\vec{s}_7 \qquad \text{(Gl. 7)}$$

Nach einer (N+1)-ten Reflexion am Funktionselement 10 soll der Strahlvektor $\vec{s}_{4N-3}$ antiparallel zu $\vec{s}_0$ sein und am gleichen, d.h. unverschobenen Ort auftreffen. Damit muss gelten:

$$\vec{s}_{4N-3} = \vec{s}_0 = \begin{pmatrix} 0 \\ 0 \end{pmatrix} \qquad \text{(Gl. 8)}$$

Für den Fall mit drei erfolgenden Reflexionen am Funktionselement 10 und N = 2 vorgesehenen Abbildungselementen 11.1, 11.2 ergibt sich

$$\begin{pmatrix} 2 \cdot \alpha \cdot D \cdot \frac{1 + m_1 + 2m_2{}^2 + m_1 m_2{}^2 + m_1{}^2 m_2{}^2}{m_1 m_2} \\ 2 \cdot \alpha \cdot k_0 \cdot \frac{1 + m_1 + m_1 m_2}{m_1 m_2} \end{pmatrix} = \begin{pmatrix} 0 \\ 0 \end{pmatrix} \qquad \text{(Gl. 9)}$$

Die einzige reelle Lösung von Gleichung (9) ergibt sich für die folgenden Werte der Abbildungsfaktoren $m_1$, $m_2$ der beiden Abbildungselemente 11.1, 11.2:

$$m_1 = -2, \ m_2 = -\frac{1}{2} \quad \text{(Gl. 10)}$$

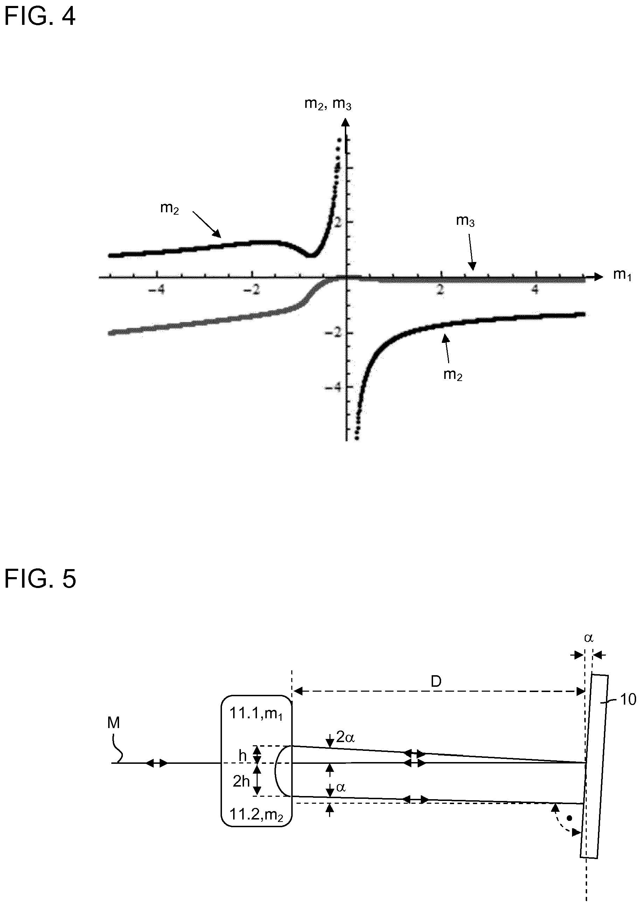

Der entsprechende Strahlengang ist in Figur 5 dargestellt. Ein Funktionselement 10, das um den Winkel $\alpha$ gekippt ist, lenkt das einfallende Messstrahlenbündel M um den Winkel $2\alpha$ ab. Dieser Winkel wird durch ein Abbildungselement 11.1 mit dem Abbildungsfaktor $m_1$ = -2 abgebildet. Die laterale Strahlverschiebung h wird dadurch in eine Verschiebung -2h umgesetzt und entsprechend der einfallende Strahlwinkel $2\alpha$ in einen ausfallenden Strahlwinkel $\alpha$. Das ausfallende Messstrahlenbündel M propagiert damit senkrecht zum Planspiegel bzw. Funktionselement 10 und wird durch diesen in sich zurück gespiegelt. Das Messstrahlenbündel M wird durch das Abbildungselement 11.2 mit dem Abbildungsfaktor $m_2$ = -1/2 abgebildet, was hier dem in umgekehrter Richtung durchlaufenen Abbildungselement 11.1 entspricht. Nach erneuter Reflexion am Funktionselement 10 tritt das Messstrahlenbündel M somit antiparallel und ohne Strahlversatz zum einfallenden Messstrahlenbündel M wieder aus, d.h. es resultiert trotz der Verkippung des Funktionselements 10 erfindungsgemäß weder eine Richtungs- noch eine Ortsscherung des Messstrahlenbündels M.
Im Folgenden sei beispielhaft noch der Fall mit N = 3 Abbildungselementen 11.1, 11.2, 11.3 und vier Reflexionen des Messstrahlenbündels M am Planspiegel des Funktionselements 10 betrachtet. Für diesen Fall gibt es unendlich viele Lösungen für die möglichen Abbildungsfaktoren $m_1$, $m_2$, $m_3$, der Abbildungselemente 11.1, 11.2, 11.3, also Kombinationen von $m_1$, $m_2$ und $m_3$, bei denen weder eine Ort- noch eine Richtungsscherung der interferierenden Teilstrahlenbündel bzw. Mess- und Referenzstrahlenbündel auftritt.

Die Lösungen für $m_2$ und $m_3$ in Abhängigkeit von $m_1$ sind in Figur 4 für den Bereich $m_1$ = -5...+5 dargestellt. Günstige Abbildungsfaktoren $m_n$ für die Abbildungselemente liegen in den Bereichen $m_n$ = -3...-1/3 bzw. $m_n$ = +1/3...+3. Außerhalb dieser Bereiche werden die Strahlquerschnitte des Messstrahlenbündels M zu groß bzw. zu klein. In diesen Bereichen kann man folgende Bedingungen für die Abbildungsfaktoren $m_n$ finden:

$$\left\{ \begin{array}{c} 0.8 \leq m_2 \leq 1.3 \\ m_1, m_3 \geq -m_2 \quad f\ddot{u}r \quad m_2 \leq 1 \\ m_1, m_3 \leq -m_2 \quad f\ddot{u}r \quad m_2 \geq 1 \end{array} \right\} \qquad (Gl.\ 11)$$

Allgemein können die möglichen Lösungen im Fall von N = 3 Abbildungselementen sowie für die Fälle mit N > 3 Abbildungselementen vereinfachend dadurch beschrieben werden, dass sowohl positive als auch negative Abbildungsfaktoren $m_n$ der Abbildungselemente auftreten; anders ausgedrückt: es sind sowohl Abbildungselemente mit positiven Abbildungsfaktoren und Abbildungselemente mit negativen Abbildungsfaktoren vorgesehen.

Nur eine dieser Lösungen für N = 3 Abbildungsfaktoren $m_n$ ist symmetrisch, d.h. sie erfüllt die Bedingung $m_1$ = $m_3$. Diese symmetrische Lösung lautet:

$$m_1 = m_3 = -1, m_2 = +1 \qquad (Gl.\ 12)$$

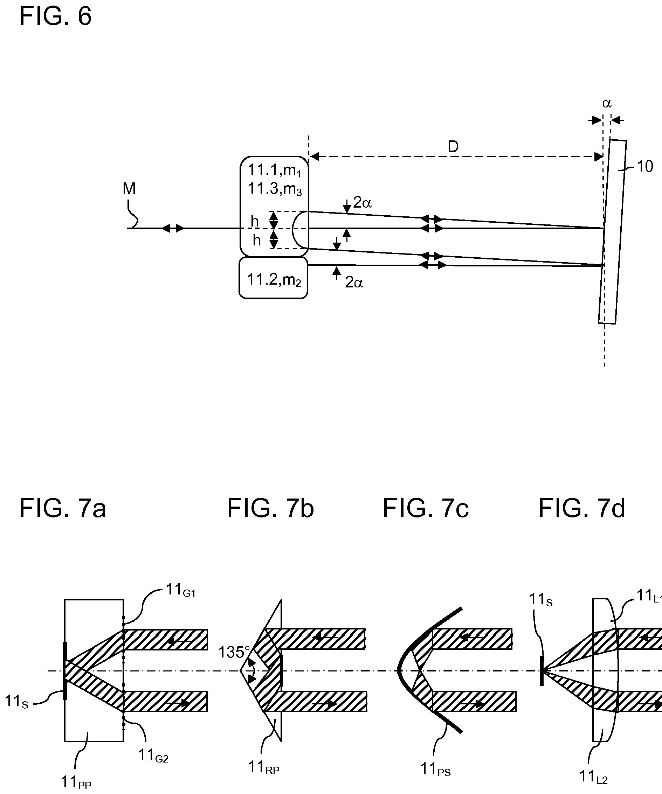

Diese Lösung ist in Figur 6 schematisiert veranschaulicht. Das Messstrahlenbündel M wird bei einer ersten Reflexion am Funktionselement 10, der um einen Winkel $\alpha$ verkippt ist, um den Winkel $2\alpha$ abgelenkt. Die Abbildung durch ein erstes Abbildungselement 11.1 mit dem Abbildungsfaktor $m_1$ = -1 bedeutet eine Retroreflexion des Messstrahlenbündels M, so dass der Strahlwinkel wiederum $2\alpha$ beträgt. Eine zweite Reflexion am Funktionselement 10 liefert ein Messstrahlenbündel M, dessen Strahlrichtung anti-parallel zum einfallenden Messstrahlenbündel M ist, das jedoch abhängig vom Kippwinkel $\alpha$ im Strahlort versetzt ist. Ein zweites Abbildungselement 11.2 mit dem Abbildungsfaktor $m_2$ = +1, beispielsweise ausgebildet als Spiegel, reflektiert das Messstrahlenbündel M unter Beibehaltung des Strahlorts, so dass es denselben Strahlverlauf wieder zurückläuft und nach einer dritten Reflexion am Funktionselement 10, dem Durchlaufen eines dritten Abbildungselements 11.2 mit dem Abbildungsfaktor $m_3$ = $m_1$ = -1 (Retroreflexion) und einer vierten Reflexion am Funktionselement 10 ohne Orts- und Richtungssscherung wieder austritt.

Für N > 3 können weitere symmetrische Lösungen gefunden werden:

N = 3, 5, 7,...:

$$m_n = -1 \text{ für } n = 1, 2, \ldots(N-1)/2, (N-1)/2+2, (N-1)/+3, \ldots N,$$

$$m_n = +1 \text{ für } n = (N-1)/2+1$$

N = 3, 6, 9,...:

$$m_n = -1 \text{ für } n = 1, 3, 4, 6, 7, 9, \ldots N,$$

$$m_n = +1 \text{ für } n = 2, 5, 8, \ldots N-1$$

Die Abbildungselemente 11.n werden hier allein durch ihr Verhalten bei kleinen Strahlverschiebungen $\Delta x$ parallel zum unverkippten Funktionselement 10 charakterisiert. Bei einem Abbildungsfaktor m verschiebt sich das austretende Messstrahlenbündel M in dieser Ebene um $\Delta x' = m \cdot \Delta x$. Damit ist auch das Verhalten der x-Komponente des k-Vektors in dieser Ebene festgelegt: Bei einer Verschiebung $\Delta kx$ des einfallenden Messstrahlenbündels M verschiebt sich das austretende Messstrahlenbündel M um $\Delta kx' = \Delta kx/m$. Dabei ist es unwesentlich ob das austretende Messstrahlenbündel M durch das Abbildungselement zusätzlich eine konstante Strahlverschiebung oder Strahlablenkung erfährt. Das bedeutet, dass die Abbildungselemente auch mit ablenkenden oder strahlversetzenden optischen Bauelementen kombiniert werden können. Gerade die Strahlversetzung ist bei einem Planspiegelinterferometer mit im wesentlichen senkrecht auftreffenden Messstrahlenbündel eine zwingende Voraussetzung, um Strahlwege zu trennen und nur den beabsichtigten Strahlverlauf zuzulassen. Ohne einen derartigen Strahlversatz würde das Messstrahlenbündel M am gleichen Strahlort erneut auf den Planspiegel bzw. das Funktionselement 10 treffen und wäre nicht vom vorhergehend auf den Planspiegel bzw. das Funktionselement 10 treffenden Messstrahlenbündel M zu unterscheiden. Damit treten unvermeidlich auch noch weitere Reflexionen am Planspiegel bzw. Funktionselement 10 auf. Ohne Strahlversatz würde damit ein Fabry-Perot-Interferometer entstehen, das bekanntermaßen keinen sinusförmigen Signalverlauf in Abhängigkeit von der Position des Planspiegels bzw. Funktionselements 10 aufweist und somit nicht wie ein inkrementales Messgerät interpolierbar ist. Der Strahlversatz ist deshalb zwingend erforderlich. Alle erfindungsgemäßen Abbildungselemente bewirken deshalb einen Strahlversatz zwischen dem ein- und austretenden Strahlenbündel. Vorteilhafterweise ist der Strahlquerschnitt größer als der Strahlquerschnitt des Messstrahlenbündels M, um eine vollständige Trennung der Strahlenbündel zu gewährleisten. Die Richtung des Strahlversatzes kann grundsätzlich beliebig gewählt werden. Dieser Freiheitsgrad kann beispielsweise genutzt werden, um die Auftrefforte des Messstrahlenbündels M auf den Planspiegel bzw. auf das Funktionselement 10 zu optimieren.

Grundsätzlich können bei gegebenem Abbildungsfaktor m verschiedene optische Elemente als Abbildungselemente eingesetzt werden. In der nachfolgenden Übersicht sind Beispiele für geeignete Abbildungselemente ohne Strahlablenkung mit definierten Abbildungsfaktoren m aufgeführt, die in der Messeinrichtung zum Einsatz kommen können; einzelne dieser Abbildungselemente sind in den Figuren 7a - 7e im Detail gezeigt.

| Abbildungsfaktor | Abbildungselement |
|---|---|
| m = +1 | Spiegel |
| | Gitter - Spiegel - Gitter |
| | Strahlversetzendes Reflexionsprisma Parabolspiegel |
| m = -1 | Tripelprisma |
| | Tripelspiegel |
| | Linse - Spiegel - Linse (refraktive oder diffraktive Linsen mit gleichen Brennweiten) Katzenauge |
| m ≠ +1 und m ≠ -1 | Linse - Spiegel - Linse |
| | (refraktive oder diffraktive Linsen mit ungleichen Brennweiten) Zwei Hälften von Parabolspiegeln mit ungleichen Brennweiten und gemeinsamen Brennpunkt |

Figur 7a zeigt ein Abbildungselement mit dem Abbildungsfaktor m = +1 gemäß der o.g. Variante "Gitter - Spiegel - Gitter", wobei die beiden Gitter $11_{G1}$, $11_{G2}$ einerseits und der Spiegel $11_S$ andererseits auf den gegenüberliegenden Seite einer transparenten Planplatte $11_{PP}$ angeordnet sind.

In Figur 7b ist ein Abbildungselement mit dem Abbildungsfaktor m = +1 veranschaulicht, das aus einem Reflexionsprisma $11_{RP}$ besteht, bei dem nacheinander eine Reflexion an allen drei Prismenflächen auftritt. Ein solches Reflexionsprisma sei nachfolgend als strahlversetzendes Reflexionsprisma bezeichnet.

Figur 7c zeigt ein Abbildungselement mit dem Abbildungsfaktor m = +1, das als Parabolspiegel $11_{PS}$ ausgebildet ist.

Figur 7d zeigt ein Abbildungselement mit dem Abbildungsfaktor m = -1 gemäß der in der Tabelle erwähnten Variante "Linse - Spiegel - Linse" mit zwei Linsen $11_{L1}$, $11_{L2}$ und einem Spiegel $11_S$.

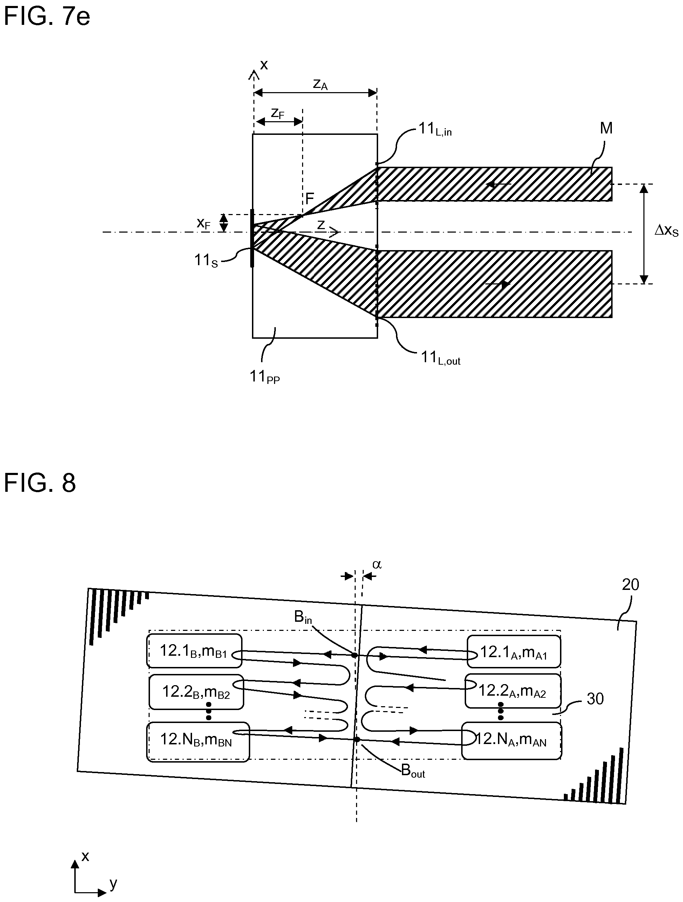

In Figur 7e ist ein Abbildungselement mit dem Abbildungsfaktor m = -2 dargestellt. Es besteht aus einer ersten diffraktiven Linse $11_{L,in}$, einem Spiegel $11_S$ und einer weiteren, zweiten diffraktiven Linse $11_{h,out}$, wobei die beiden diffraktiven Linsen $11_{L,in}$ $11_{L,out}$ und der Spiegel $11_S$ auf den gegenüberliegenden Seiten einer transparenten Planplatte $11_{PP}$ ähnlich zur Variante in Figur 7a angeordnet sind.

Die beiden Linsen $11_{L,in}$, $11_{L,out}$ weisen hierbei unterschiedliche Brennweiten auf und sind derart angeordnet, dass ein auf die erste $11_{L,in}$ einfallendes, kollimiertes Teilstrahlenbündel nach dem Durchlaufen der zweiten Linse $11_{L,out}$ wiederum kollimiert weiterpropagiert.

Das einfallende Messstrahlenbündel M wird bei diesem Abbildungselement durch die erste diffraktive Linse $11_{L,in}$ in einen Brennpunkt F am Ort $(x_F, z_F)$ fokussiert, der gleichzeitig auch der Brennpunkt der zweiten diffraktiven Linse $L_{11,out}$ ist. Wenn $f_{in}$ und $f_{out}$ die Brennweiten der beiden diffraktiven Linsen $11_{L,in}$, $11_{L,out}$ in Glas mit dem Brechungsindex $n_G$ bezeichnen, so muss für die Kollimation des austretenden Messstrahlenbündels M gelten:

$$f_{in} = z_A - z_F, \quad f_{out} = z_A + z_F \qquad \text{(Gl. 13)}$$

Der Abbildungsmaßstab m dieses Abbildungselements ist gegeben durch:

$$m = -\frac{f_{out}}{f_{in}} \qquad \text{(Gl. 14)}$$

Weiterhin soll ein definierter Strahlversatz $\Delta x_S$ durch eine geeignete Wahl von $x_F$ entstehen:

$$\frac{\frac{\Delta x_S}{2}-x_F}{f_{in}} = \frac{\frac{\Delta x_S}{2}+x_F}{f_{out}} \qquad \text{(Gl. 15)}$$

Für vorgegebene Werte für den Strahlversatz $\Delta x_S$ und den Abbildungsmaßstab m ergibt sich:

$$f_{in} = \frac{2 \cdot z_A}{1-m} \qquad \text{(Gl. 16)}$$

$$f_{out} = -\frac{2 \cdot m \cdot z_A}{1-m} \quad \text{(Gl. 17)}$$

$$x_F = \frac{\Delta x_S}{2} \cdot \frac{m+1}{m-1} \quad \text{(Gl. 18)}$$

Die entsprechenden Phasenfunktionen für die beiden diffraktiven Linsen $11_{L,in}$, $11_{L,out}$ ergeben sich zu:

$$\Phi_{in}(x,y) = -k_0 \cdot n_G \cdot \sqrt{f_{in}^{\,2} + (x-x_F)^2 + (y-y_F)^2} \quad \text{(Gl. 19)}$$

$$\Phi_{out}(x,y) = -k_0 \cdot n_G \cdot \sqrt{f_{out}^{\,2} + (x-x_F)^2 + (y-y_F)^2} \qquad \text{(Gl. 20)}$$

Dabei wurde auch in y-Richtung ein Strahlversatz $\Delta y_S$ angenommen, der zu einer Verschiebung $y_F$ des Brennpunkts in y-Richtung analog zu Gleichung (18) führt:

$$y_F = \frac{\Delta y_S}{2} \cdot \frac{m+1}{m-1} \quad \text{(Gl. 21)}$$

Ein derartiges Abbildungselement lässt sich für $m \neq -1$ und $m \neq +1$ nur mit Hilfe von Linsen realisieren. Gegenüber Tripelprismen bieten Linsen den Vorteil, dass das Messstrahlenbündel M nicht durch Facettenkanten beeinträchtigt wird und damit die Wellenfronten ungestört bleiben. Grundsätzlich können aber im Fall m = -1 ebenso Tripelprismen oder Tripelspiegel als Abbildungselemente eingesetzt werden. Der Fall m = +1 entspricht einer einfachen Spiegelreflexion ohne Linsen ($f_{in}$, $f_{out} \to \infty$ und $\phi_{in}$, $\phi_{in} \to$ const). Bei Abbildungselementen mit Linsen können neben diffraktiven Linsen selbstverständlich auf refraktive Linsen insbesondere asphärische Linsen eingesetzt werden.

## Interferentielle Positionsmesseinrichtung mit Maßverkörperung

Die Vermeidung von Richtungs- und Ortsscherungen der aufgespaltenen Teilstrahlenbündel ist auch bei Messeinrichtungen vorteilhaft, die als interferentielle Positionsmesseinrichtung mit Maßverkörperung ausgebildet sind; dies sei nachfolgend anhand von Figur 8 im Detail erläutert. In derartigen Positionsmesseinrichtungen werden zwei Teilstrahlenbündel durch eine geeignete Strahlaufspaltung erzeugt, im folgenden seien diese als Teilstrahlenbündel A und Teilstrahlenbündel B bezeichnet. Die Teilstrahlenbündel A, B durchlaufen nach der Aufspaltung unterschiedliche Strahlwege und werden schließlich zur Interferenz gebracht. Hierbei werden die beiden Teilstrahlenbündel A, B über eine hier als optisches Funktionselement 20 fungierende Maßverkörperung geleitet, deren Lage bzw. Position bestimmt werden soll. Die Maßverkörperung besteht hierbei üblicherweise aus einem in Messrichtung periodischen Gitter.

Im Fall einer Kippung der Maßverkörperung um eine beliebige Achse in der Maßverkörperungsebene sind zwei Fälle zu unterscheiden. Bei einer Durchlicht-Maßverkörperung ist die kippungsbedingte Ablenkung der transmittierten Teilstrahlenbündel A, B im Allgemeinen so gering, dass sie vernachlässigt werden kann. Wird hingegen eine Auflicht-Maßverkörperung entsprechend verkippt, so ist die resultierende Ablenkung der Teilstrahlenbündel A, B deutlich größer.

Allerdings werden beide Teilstrahlenbündel A, B bei den üblichen symmetrischen Strahlengängen nahezu gleich abgelenkt, so dass bei der Überlagerung nur eine gemeinsame Orts- und Richtungsverschiebung der Teilstrahlenbündel A, B auftritt, nicht aber eine Orts- und Richtungsscherung der Teilstrahlenbündel A, B zueinander. Bei einer Kippung der Maßverkörperung um eine Achse senkrecht auf die Maßverkörperungsebene, d.h. im Fall einer sog. Moire-Kippung, gibt es aber eine gegenläufige Orts- und Richtungsverschiebung der Teilstrahlenbündel A, B. Bei den bisher bekannten interferentiellen Positionsmesseinrichtungen ohne Retroreflektor führt das zu einer Orts- und Richtungsscherung der Teilstrahlenbündel A, B. In bislang bekannten interferentiellen Positionsmesseinrichtungen mit Retroreflektor kann die Richtungsscherung vermieden werden, es tritt nur eine Ortsscherung der Teilstrahlenbündel A, B auf.

Um sowohl Orts- als auch Richtungsscherungen der Teilstrahlenbündel A, B gleichzeitig zu verhindern, werden erfindungsgemäß auch in diesen Messeinrichtungen wieder geeignet ausgebildete Abbildungselemente zwischen dem jeweiligen Beaufschlagen des optischen Funktionselements eingefügt. Im vorliegenden Fall der interferentiellen Positionsmesseinrichtungen stellen hierbei die einzelnen Beugungen der Teilstrahlenbündel A, B an der Maßverkörperung das Beaufschlagen des Funktionselements dar. Schematisiert ist das in Figur 8 in einer xy-Ebene parallel zum Funktionselement 20 bzw. Maßverkörperung dargestellt: Ein senkrecht auf das Funktionselement 20 einfallendes Strahlenbündel $B_{in}$ wird am Funktionselement 20 bzw. der Maßverkörperung ein erstes Mal in eine +1. und -1. Beugungsordnung gebeugt bzw. aufgespalten. Die über diese Strahlaufspaltung resultierenden Teilstrahlenbündel A, B propagieren dann jeweils zu ersten Abbildungselementen $12.1_A$ bzw. $12.1_B$ mit den Abbildungsfaktoren $m_{A1}$ bzw. $m_{B1}$, gelangen zurück zum Funktionselement 20 und werden dann erneut in jeweils dieselbe +1. bzw. -1. Beugungsordnung abgelenkt. Im weiteren Strahlverlauf werden nacheinander jeweils N weitere Abbildungselemente $12.n_A$ bzw. $12.n_B$ mit n = 2...N und den Abbildungsfaktoren $m_{An}$ bzw. $m_{Bn}$ durchlaufen, wobei dazwischen jeweils eine erneute Beugung am Funktionselement 20 in jeweils derselben +1. bzw. -1. Beugungsordnung stattfindet. Nach einer (N+1)-ten Beugung am Funktionselement 20 werden die beiden Teilstrahlenbündel A, B kollinear zu einem Strahlenbündel $B_{out}$ überlagert und treten senkrecht zum Funktionselement 20 aus. Mittels einer nicht gezeigten, nachgeordneten Detektoranordnung werden aus dem interferierenden Paar von Teilstrahlenbündeln A, B phasencodierte Messsignale bzw. positionsabhängige Abtastsignale erzeugt.

In Figur 8 findet die Aufspaltung und Überlagerung der beiden Teilstrahlenbündel A, B jeweils durch eine Beugung an der Maßverkörperung bzw. dem Funktionselement 20 statt, d.h. das Funktionselement 20 in Form einer Maßverkörperung fungiert hier gleichzeitig als Aufspalt- und Vereinigungselement. Alternativ können aber diese Funktionen ebenso über ein separates Aufspaltelement und/oder ein separates Vereinigungselement in der schematisiert angedeuteten Abtasteinheit 30 übernommen werden. Vorteilhaft werden dafür entsprechende Abtastgitter eingesetzt.

Die Berechnung der optimalen Abbildungsmaßstäbe $m_{An}$ und $m_{Bn}$ der verwendeten Abbildungselemente $12.n_A$ bzw. $12.n_B$ kann wieder mit Hilfe von Raytracing-Verfahren erfolgen. Vorteilhaft sind dabei symmetrische Lösungen mit $m_{An} = m_{Bn} = m_n$. Im Fall einer interferentiellen Positionsmesseinrichtung mit einem als Maßverkörperung ausgebildeten Funktionselement kann man sich auf die Dimensionen x, z parallel zur Strichrichtung x der Maßverkörperung bzw. des Funktionselements 20 und senkrecht zum Funktionselement 20 beschränken, da eine Moire-Kippung in linearer Näherung nur eine Strahlbewegung in Strichrichtung x des Funktionselements 20 bewirkt. Die Messrichtung der Positionsmesseinrichtung verläuft in diesem Koordinatensystem entlang der y-Achse, die senkrecht zur Strichrichtung x des Funktionselements 20 orientiert ist.

Jedes Strahlengangsegment der Teilstrahlenbündel A, B wird wieder gemäß obiger Gleichung (2) durch einen entsprechend vereinfachten Strahlvektor $\vec{s}$ beschrieben, wobei die erste Komponente x nur die Verschiebung des Strahlortes und die zweite Komponente kx nur die Änderung des k-Vektors in x-Richtung aufgrund einer Moire-Kippung $\alpha$ der Maßverkörperung bzw. des Funktionselements 20 beschreibt. Statt Gleichung (3) ergibt sich im vorliegenden Fall in linearer Näherung:

$$\vec{s}_{1A} = \vec{s}_{0A} + \begin{pmatrix} 0 \\ +\alpha \cdot k_G \end{pmatrix}, \quad \vec{s}_{1B} = \vec{s}_{0B} + \begin{pmatrix} 0 \\ -\alpha \cdot k_G \end{pmatrix} \qquad \text{(Gl. 22)}$$

Hierbei wird mit $k_G$ der Gittervektor $k_G = 2\pi/d_M$ der Maßverkörperung des Funktionselements 20 bezeichnet, mit $d_M$ die Gitterperiode $d_M$ der Maßverkörperung . Der Strahlvektor $\vec{s}_{0A}$ bzw. $\vec{s}_{1A}$ beschreibt dabei das auf das Funktionselement 20 einfallende bzw. austretende Teilstrahlenbündel A; analog beschreiben die Strahlvektoren $\vec{s}_{0B}$ bzw. $\vec{s}_{1B}$ die entsprechenden Strahlengangsegmente des Teilstrahlenbündels B.

Wenn die Aufspaltung der Teilstrahlenbündel A, B durch das Funktionselement 20 erfolgt, gilt $\vec{s}_{0A} = \vec{s}_{0B} = \vec{s}_0$. Die Propagation über den in z-Richtung gemessenen Abtastabstand D zwischen dem Funktionselement 20 und den Abbildungselementen $12.n_A$ bzw. $12.n_B$ der Abtasteinheit 30 führt zu einer Verschiebung $\Delta x$ des Strahlortes, der von der x-Komponente des k-Vektors abhängt:

$$\Delta x = \frac{k_x}{k_z} \cdot D = \frac{k_x}{k_0} \cdot \frac{k_0}{k_z} \cdot D = \frac{k_x}{k_0} \cdot \frac{D}{\cos(\beta)} \qquad (Gl.\ 23)$$

Hierbei bezeichnet der Winkel β die Strahlneigung des Teilstrahlenbündels A, B in Bezug auf die optische Achse z, die im Nennanbau der Positionsmesseinrichtung ohne Kippung des Funktionselements 20 vorliegt.

Damit ergibt sich analog zu obiger Gleichung (4) mit y = A bzw. B:

$$\vec{s}_{2\gamma} = \begin{pmatrix} 1 & \frac{D}{k_0 \cdot \cos(\beta_1)} \\ 0 & 1 \end{pmatrix} \cdot \vec{s}_{1\gamma} \qquad (Gl.\ 24)$$

Gleichung (5) und (6) müssen entsprechend ersetzt werden:

$$\vec{s}_{3\gamma} = \begin{pmatrix} m_1 & 0 \\ 0 & 1/m_1 \end{pmatrix} \cdot \vec{s}_{2\gamma} \qquad (Gl.\ 25)$$

$$\vec{s}_{4\gamma} = \begin{pmatrix} 1 & \frac{D}{k_0 \cdot \cos(\beta_3)} \\ 0 & 1 \end{pmatrix} \cdot \vec{s}_{3\gamma} \qquad (Gl.\ 26)$$

Die Strahlneigungen $\beta_n$ können natürlich für jede Propagation vom Funktionselement 20 zur Abtasteinheit 30 und zurück unterschiedlich sein.

Der weitere Strahlverlauf nach Figur 8 wird entsprechend durch weitere Transformationen analog zu den Gleichungen (22), (24) - (26) beschrieben, so dass die Gleichungen (22) und (24) - (26) jeweils mit verändertem Abbildungsfaktor $m_n$ insgesamt N-1 mal angewandt werden:

$$\vec{s}_{5\gamma} = \vec{s}_{4\gamma} + \begin{pmatrix} 0 \\ \pm \alpha \cdot k_G \end{pmatrix}, \quad \vec{s}_{6\gamma} = \begin{pmatrix} 1 & \frac{D}{k_0 \cdot \cos(\beta_5)} \\ 0 & 1 \end{pmatrix} \cdot \vec{s}_{5\gamma}, \quad \vec{s}_{7\gamma} = \begin{pmatrix} m_2 & 0 \\ 0 & 1/m_2 \end{pmatrix} \cdot \vec{s}_{6\gamma},$$

$$\vec{s}_{8\gamma} = \begin{pmatrix} 1 & \frac{D}{k_0 \cdot \cos(\beta_7)} D \\ 0 & 1 \end{pmatrix} \cdot \vec{s}_{7\gamma} \qquad (Gl.\ 27)$$

Hierbei gilt das Pluszeichen für y = A und das Minuszeichen für y = B.

Nach der N-ten Beugung an der Maßverkörperung des Funktionselements 20 sollen die Strahlvektoren $\vec{s}_{(4N-3)A}$ und $\vec{s}_{(4N-3)B}$ gleich sein. Damit muss analog zu obiger Gleichung (8) gelten:

$$\vec{s}_{(4N-3)A} = \vec{s}_{(4N-3)B} \qquad (Gl.\ 28)$$

Für den Fall N = 2 (dreifache Beugung am Funktionselement 20, zwei Abbildungselemente) ergibt sich aus Gleichung (28) analog zu Gleichung (9) folgende Bedingung für die entsprechende Positionsmesseinrichtung:

$$\begin{pmatrix} \frac{2 \cdot \alpha \cdot D}{m_1 m_2} \cdot \frac{k_G}{k_0} \cdot \left( \frac{m_1^2 m_2^2}{\cos(\beta_1)} + \frac{m_2^2}{\cos(\beta_3)} + \frac{(1+m_1) \cdot m_2^2}{\cos(\beta_5)} + \frac{1+m_1}{\cos(\beta_7)} \right) \\ 2 \cdot \alpha \cdot k_G \cdot \frac{1+m_1+m_1 m_2}{m_1 m_2} \end{pmatrix} = \begin{pmatrix} 0 \\ 0 \end{pmatrix} \qquad (Gl.\ 29)$$

Dies führt auf folgende Bedingung für $m_1$ (die Lösung $m_1 = -1$, $m_2 = 0$ muss ausgeschlossen werden):

$$m_1^2 \cdot \left( \frac{1}{\cos(\beta_7)} + \frac{1+m_1}{\cos(\beta_1)} \right) + (1 + m_1) \cdot \left( \frac{1}{\cos(\beta_3)} + \frac{1+m_1}{\cos(\beta_5)} \right) = 0 \quad (Gl.\ 30)$$

Diese Polynomgleichung dritter Ordnung lässt sich analytisch lösen, auf Details zur Lösung sei hier nicht weiter eingegangen. Die Lösungen hängen im Allgemeinen von den Winkeln $\beta_n$ ab. Fordert man zusätzlich für jedes Teilstrahlenbündel A bzw. B jeweils einen zur zweiten Beugung am Funktionselement 20 symmetrischen Strahlengang, so erhält man die zusätzlichen Bedingungen

$$\beta_7 = \beta_1, \ \beta_5 = \beta_3 \qquad (\text{Gl. 31})$$

Mit diesen Bedingungen liefert Gleichung (30) unter anderem folgende Lösung:

$$m_1 = -2, \ m_2 = -\frac{1}{2} \quad (\text{Gl. 32})$$

Sie stimmt mit obiger Gleichung (10) überein und ist nicht von den Winkeln $\beta_n$ abhängig.

Für den Fall N = 3 (vierfache Beugung an der Maßverkörperung des Funktionselements 20, drei Abbildungselemente) ergeben sich aus Gleichung (27) unendlich viele Lösungen. Fordert man zusätzlich die folgenden Symmetriebedingungen

$$\beta_{11} = \beta_1, \ \beta_9 = \beta_3, \ \beta_7 = \beta_5, \ m_3 = m_1 \qquad (\text{Gl. 33}),$$

so erhält man unter anderem die zu Gleichung (12) äquivalente Lösung

$$m_1 = m_3 = -1, m_2 = +1 \qquad (\text{Gl. 34})$$

Da bei einer Moire-Kippung in linearer Näherung nur eine Strahlverschiebung und -kippung in Strichrichtung x der Maßverkörperung des Funktionselements 20 auftritt, genügt es, wenn die Abbildungselemente 12.1, 12.2, ... 12.n nur in dieser Strichrichtung x, d.h. senkrecht zur Messrichtung y der Positionsmesseinrichtung die oben bestimmten Abbildungsfaktoren $m_{nx}$ aufweisen. In Messrichtung y können sowohl dieselben aber auch andere Abbildungsfaktoren $m_{ny}$ verwendet werden. Insbesondere ist es oftmals vorteilhaft, in Messrichtung y nur die Abbildungsfaktoren $m_{ny} = \pm 1$ zu verwenden. Das bedeutet, dass als Abbildungselemente auch Dachkantprismen (in Dachkantrichtung m = 1, quer dazu m = -1), eine Kombination aus einer Zylinderlinse, einem Spiegel und einer Zylinderlinse (in Ablenkrichtung der Zylinderlinsen m beliebig, quer dazu m = +1) oder eine Kombination aus einer astigmatischen Linse, einem Spiegel und einer astigmatischen Linse (in beiden Richtungen jeweils beliebige Abbildungsfaktoren) eingesetzt werden können. Die Gleichungen (19) und (20) müssen bei Zylinderlinsen entsprechend abgeändert werden. Soll die Ablenkrichtung der Zylinderlinsen entlang der x-Richtung verlaufen, so gilt:

$$\Phi_{in}(x, y) = -k_0 \cdot n_G \cdot \sqrt{f_{in}^{\,2} + (x - x_F)^2} \qquad (\text{Gl. 35})$$

$$\Phi_{out}(x, y) = -k_0 \cdot n_G \cdot \sqrt{f_{out}^{\,2} + (x - x_F)^2} \qquad (\text{Gl. 36})$$

Bei astigmatischen Linsen kann in guter Näherung folgender Ansatz gewählt werden:

$$\Phi_{in}(x, y) = -k_0 \cdot n_G \cdot \left( \frac{x^2}{x^2 + y^2} \cdot \sqrt{f_{in,x}^{\,2} + (x - x_F)^2 + (y - y_F)^2} + \frac{y^2}{x^2 + y^2} \cdot \right.$$

$$\left. \sqrt{f_{in,y}^{\,2} + (x - x_F)^2 + (y - y_F)^2} \right) \qquad (\text{Gl. 37})$$

$$\Phi_{out}(x,y) = -k_0 \cdot n_G \cdot \left( \frac{x^2}{x^2+y^2} \cdot \sqrt{f_{out,x}{}^2 + (x - x_F)^2 + (y - y_F)^2} + \frac{y^2}{x^2+y^2} \cdot \right.$$

$$\left. \sqrt{f_{out,y}{}^2 + (x - x_F)^2 + (y - y_F)^2} \right) \qquad (Gl.\ 38)$$

mit den Brennweiten $f_{in,x}$ und $f_{out,x}$ in x-Richtung und den Brennweiten $f_{in,y}$ und $f_{out,y}$ in y-Richtung. Durch die unabhängige Wahl der Brennweiten in x- und y-Richtung kann mithilfe der Gleichungen (13) - (18) und Gleichung (21) die Abbildungs-faktoren $m_x$ und $m_y$ für die beiden Richtungen x und y getrennt festgelegt werden.

Erstes Ausführungsbeispiel

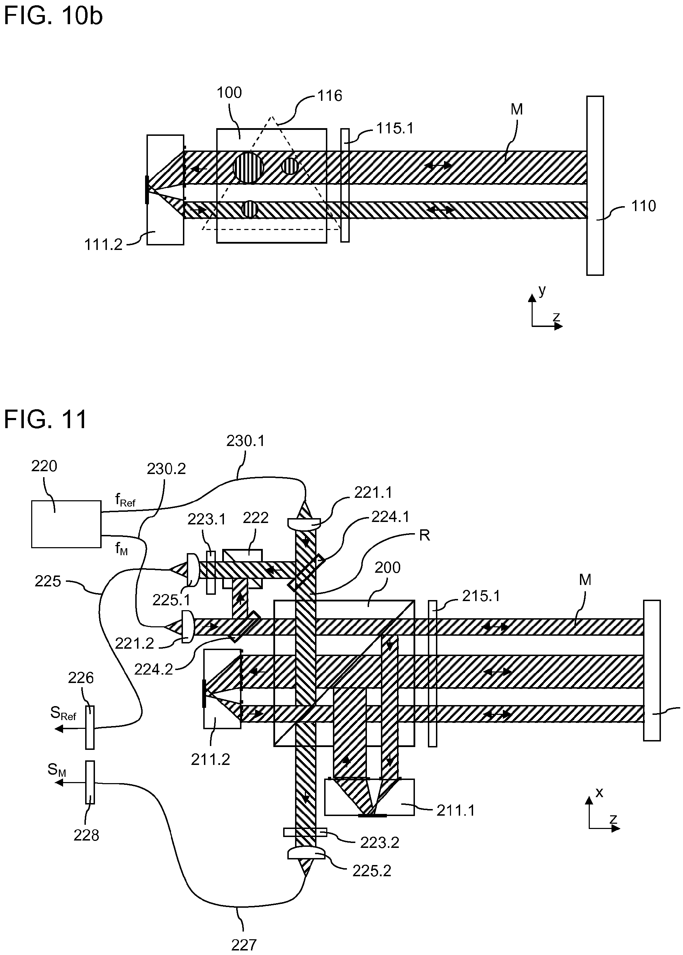

Ein erstes Ausführungsbeispiel einer als Planspiegelinterferometer ausgebildeten, erfindungsgemäßen Messeinrichtung mit N = 2 Abbildungselementen, ist in den Figuren 9a - 9c sowie 10a, 10b schematisiert dargestellt. Figur 10a stellt hierbei eine Schnittansicht der in Figur 9a mit AA' bezeichneten Ebene dar, Figur 10b eine Schnittansicht der in Figur 9a mit BB' bezeichneten Ebene.

Mit Hilfe dieser Messeinrichtung ist der Abstand des optischen Funktionselements 110, ausgebildet als Planspiegel, entlang der Messrichtung z relativ zu den anderen gezeigten Komponenten der Messeinrichtung bestimmbar.

Ein linear polarisiertes Strahlenbündel S, emittiert von einer - nicht gezeigten - als Laser ausgebildeten Lichtquelle, propagiert entlang der in den Figuren mit z bezeichneten Richtung zu einem Aufspaltelement 100. Das Aufspaltelement 100 ist als polarisierender Strahlteiler mit einer entsprechenden Strahlteilerschicht ausgebildet. Die Polarisationsrichtung der Lichtquelle ist unter 45° zur angegebenen x-Richtung orientiert. Über das Aufspaltelement 100 resultiert hier eine Aufspaltung des einfallenden Strahlenbündels S in zwei Teilstrahlenbündel, nämlich in ein Messstrahlenbündel M und ein Referenzstrahlenbündel R.

Das Messstrahlenbündel M propagiert weiter entlang der in den Figuren angegebenen z-Richtung über eine λ/4-Platte 115.1 zum optischen Funktionselement 110 in Form eines Planspiegels, dessen Position entlang der z-Richtung gemessen werden soll und auf den das Messstrahlenbündel M dann senkrecht einfällt. Nach der erstmaligen Beaufschlagung des Planspiegels und der Rückreflexion durchtritt das Messstrahlenbündel M nachfolgend ein zweites Mal die λ/4-Platte 115.1, so dass dieses dann eine um 90° gedrehte Polarisationsrichtung aufweist. Das Aufspaltelement 100 bzw. der polarisierende Strahlteiler lenkt dann das Messstrahlenbündel M in -x-Richtung ab und leitet dieses dann in Richtung eines ersten Abbildungselements 111.1, das einen Abbildungsfaktor $m_1$ = -2 aufweist. Das erste Abbildungselement 111.1 versetzt das Messstrahlenbündel M gleichzeitig in z-Richtung. Anschließend trifft das Messstrahlenbündel M wiederum auf den polarisierenden Strahlteiler des Aufspaltelements 100 und wird in Richtung des Funktionselements 110 bzw. Planspiegels reflektiert. Nach dem erneuten Durchlaufen der λ/4-Platte 115.1, der zweiten Reflexion am Planspiegel respektive Funktionselement 110 und dem nochmaligen Durchlaufen der λ/4-Platte 115.1 ist die Polarisation des Messstrahlenbündels M wieder zurückgedreht, so dass das Messstrahlenbündel M den polarisierenden Strahlteiler des Aufspaltelements 100 dann ohne weitere Ablenkung passiert. Das Messstrahlenbündel M durchläuft anschließend das zweite Abbildungselement 111.2, das den Abbildungsfaktor $m_2$ = -1/2 aufweist, wird darüber abgebildet und in y-Richtung versetzt. Dann propagiert das Messstrahlenbündel über den polarisierenden Strahlteiler des Aufspaltelements 100 erneut zur λ/4-Platte 115.1 und zum optischen Funktionselement 110 bzw. Planspiegel. Nach einer dritten Reflexion am Planspiegel und einem weiteren Durchtritt durch die λ/4-Platte 115.1 wird das Messstrahlenbündel M dann vom polarisierenden Strahlteiler des Aufspaltelements 100 abgelenkt und propagiert zu einer nicht dargestellten Detektoranordnung.

Das Referenzstrahlenbündel R tritt in +x-Richtung aus dem polarisierenden Strahlteiler bzw. Aufspaltelement 100 aus und trifft über eine λ/4-Platte 115.2 auf ein Retroreflektorelement 116, ausgebildet als Tripelprisma. Das Tripelprisma ist hierbei so justiert bzw. angeordnet, dass das Referenzstrahlenbündel R auf keine seiner Kanten trifft. Über das Retroreflektorelement 116 resultiert eine Rückreflexion des darauf einfallenden Referenzstrahlenbündels R in Richtung des Aufspaltelements 100; dabei versetzt das Retroreflektorelement 116 das Referenzstrahlenbündel R derart in y- und z-Richtung, dass anschließend kein Strahlversatz zwischen dem Messstrahlenbündel M und dem Referenzstrahlenbündel R entsteht. Nach einem weiteren Durchtritt durch die λ/4-Platte 115.2 weist das Referenzstrahlenbündel R eine um 90° gedrehte Polarisation auf, so dass es ohne Ablenkung nachfolgend den polarisierenden Strahlteiler des Aufspaltelements 100 passiert und dann mit dem Messstrahlenbündel M kollinear überlagert wird. Die überlagerten Strahlenbündel sind senkrecht zueinander polarisiert und propagieren dann zu der nicht dargestellten Detektoranordnung. Dort findet in bekannter Weise eine Erzeugung von phasencodierten Messsignalen statt, beispielsweise in Form dreier um 120° phasenversetzter Signale, aus denen ein Positionswert abgeleitet wird.

Durch den erfindungsgemäßen Aufbau der als Planspiegelinterferometer ausgebildeten Messeinrichtung ist sichergestellt, dass bei einer begrenzten Kippung des als Funktionselement 110 fungierenden Planspiegels keine Orts- und/oder Richtungsscherung zwischen den beiden zur Signalgewinnung genutzten Teilstrahlenbündeln, d.h. zwischen dem Messstrahlenbündel M und dem Referenzstrahlenbündel R auftritt. Entsprechend große Kipptoleranzen können für den Planspiegel damit zugelassen werden. Bei optimaler Auslegung können diese Kipptoleranzen bei gleichen Strahlquerschnitten durchaus zehn Mal größer sein wie bei herkömmlichen Planspiegelinterferometern.

Gewährleistet wird dies vorliegend durch die erfindungsgemäße Verwendung geeigneter Abbildungselemente 111.1, 111.2 im Strahlengang des Messstrahlenbündels M, die die o.g. Abbildungsfaktoren $m_1 = -2$, $m_2 = -\frac{1}{2}$ aufweisen. Ausgebildet sind diese wie aus den Figuren ersichtlich als Linse-Spiegel-Linse-Systeme, wie sie oben etwa in Figur 7e beispielhaft erläutert wurden.

Das erste Ausführungsbeispiel einer erfindungsgemäßen Messeinrichtung kann im Rahmen der vorliegenden Erfindung natürlich abgewandelt werden.

So ist es möglich, etwa anstelle des als Tripelprisma ausgebildeten Retroreflektorelements zur Reflexion des Referenzstrahlenbündels ein optisches Abbildungselement als Retroreflektorelement vorzusehen, das den Abbildungsfaktor $m_{Ref} = -1$ besitzt; hierzu geeignet wären z.B. die in der obigen Tabelle für den Abbildungsfaktor $m = -1$ erwähnten Abbildungselemente.

Ferner kann vorgesehen werden, die Strahlversätze der Abbildungselemente 111.1, 111.2 in den beiden transversalen Richtungen y, z bzw. x, y in weiten Grenzen zu wählen usw..

Zweites Ausführungsbeispiel

In Figur 11 ist ein als Heterodyn-Planspiegelinterferometer ausgebildetes zweites Ausführungsbeispiel einer erfindungsgemäßen Messeinrichtung schematisiert dargestellt. Vorgesehen sind eine dreimalige Reflexion des Messstrahlenbündels M am optischen Funktionselement 210 sowie N = 2 Abbildungselemente 211.1, 211.2, die zwischen den drei erfolgenden Reflexionen durchlaufen werden.

Eine Lichtquelle 220, z.B. ein Laser, liefert zwei Strahlenbündel mit den Frequenzen $f_M$ und $f_{Ref}$; diese frequenzverschiedenen Strahlenbündel fungieren im vorliegenden Ausführungsbeispiel als Messstrahlenbündel M und als Referenzstrahlenbündel R. Es erfolgt somit hier keine Aufspaltung eines von der Lichtquelle emittierten Strahlenbündels über ein von der Lichtquelle getrenntes Aufspaltelement, die Erzeugung der zwei Teilstrahlenbündel, d.h. des Messstrahlenbündels M und des Referenzstrahlenbündels R, wird hier von der entsprechend ausgebildeten Lichtquelle übernommen. Die Differenzfrequenz $\Delta f = f_M - f_{Ref}$ der Frequenzen des Mess- und Referenzstrahlenbündels M, R ist so gewählt, dass ein entsprechend moduliertes optisches Signal mit schnellen Photodetektoren detektierbar ist. Die Erzeugung des Messstrahlenbündels M mit der Frequenz $f_M$ kann beispielsweise mit einem frequenzstabilisierten Faserlaser oder HeNe-Laser erfolgen, von dem ein Teil abgespalten und durch einen akusto-optischen Modulator (AOM) um die Frequenz $\Delta f$ frequenzverschoben wird. Dieser Teil liefert das Referenzstrahlenbündel R mit der Frequenz $f_{Ref}$.

Beide Teilstrahlenbündel M, R werden getrennt über Lichtleitfasern 230.1, 230.2, ausgebildet als polarisationserhaltende Monomode-Fasern, zum Planspiegelinterferometer geleitet. Dort werden sie jeweils über Kollimationsoptiken 221.1, 221.2 kollimiert und in der Polarisation so ausgerichtet, dass diese senkrecht zueinander stehen. Ein Teil der Teilstrahlenbündel M, R wird jeweils über teildurchlässige Spiegel 224.1, 224.2 abgespalten und über ein Strahlvereinigungselement 222 überlagert, so dass sie nach Durchlaufen eines Polarisators 223.1 interferieren können. Das überlagerte Strahlenbündel wird mittels einer Einkoppellinse 225.1 in eine Lichtleitfaser 225, ausgebildet als Singlemode-Faser, eingekoppelt und einem Detektor 226 zugeführt, der ein entsprechendes, mit der Frequenz $\Delta f$ moduliertes Referenzsignal $S_{Ref}$ liefert. Die Phase des Referenzsignals $S_{Ref}$ dient als Referenzphase $\varphi_{Ref}$.

Das Messstrahlenbündel M mit der Frequenz $f_M$ durchläuft vergleichbar zum ersten Ausführungsbeispiel die verschiedenen optischen Komponenten der erfindungsgemäßen Messeinrichtung wie folgt:
Aufspaltelement 200, ausgebildet als polarisationsoptischer Strahlteiler; $\lambda$/4-Platte 215.1; Funktionselement 210, ausgebildet als Planspiegel; $\lambda$/4-Platte 215.1; Abbildungselement 211.1, Abbildungsfaktor $m_1 = -2$; Aufspaltelement 200; $\lambda$/4-Platte 215.1; Funktionselement 210; $\lambda$/4-Platte 215.1; Aufspaltelement 200; Abbildungselement 211.2, Abbildungsfaktor $m_2 = -1/2$; Aufspaltelement 200; $\lambda$/4-Platte 215.1; Funktionselement 210; $\lambda$/4-Platte 215.1; Aufspaltelement 200

Anschließend trifft das Messstrahlenbündel M auf einen Polarisator 223.2.

Das Referenzstrahlenbündel R durchläuft das Aufspaltelement 200, wird dabei dem Messstrahlenbündel M nach dessen dritter Rückreflexion vom Funktionselement 210 kollinear überlagert und gelangt ebenfalls auf den Polarisator 223.2, der beide Strahlenbündel zur Interferenz bringt. Da das überlagerte Strahlenbündel aufgrund der erfindungsgemäßen Maßnahmen auch bei einer Kippung des Funktionselements 210 bzw. des Planspiegels weder seinen Ort noch seine Richtung ändert, kann es über eine Einkoppellinse 225.2 in eine weitere Lichtleitfaser 227, ausgebildet als Singlemode-Faser, eingekoppelt werden. Die Lichtleitfaser 227 überträgt das überlagerte Strahlenbündel zum Detektor 228. Das erzeug Signal $S_M$ liefert wiederum ein mit der Differenzfrequenz $\Delta f$ moduliertes Signal, dessen Phase $\varphi_M$ bestimmt wird. Die Phasendifferenz $\varphi_M - \varphi_{Ref}$ liefert in bekannter Weise die Position des entlang der z-Richtung beweglichen Funktionselements 210. Die Übertragung des überlagerten Strahlenbündels in der als Singlemode-Faser ausgebildeten Lichtleitfaser 227 gewährleistet eine sehr konstante Laufzeit, die im Gegensatz zu einer elektrischen Übertragung oder einer optischen Übertragung in einer Multimode-Faser sehr konstant ist und nicht von der Biegung des Übertragungskabels abhängt.

In diesem Ausführungsbeispiel verlaufen alle Strahlenbündel in einer gemeinsamen xz-Ebene, die hier mit der Zeichenebene zusammenfällt. Die auf das Funktionselement 210 bzw. den Planspiegel senkrecht auftreffenden Messstrahlenbündel M liegen auf einer Linie. Aus diesem Grund kann die Ausdehnung des Funktionselements 210 bzw. Planspiegels in y-Richtung, d.h. senkrecht zur Zeichenebene, entsprechend klein gewählt werden.

Das Aufspaltelement 200 dient sowohl im ersten wie auch im vorliegenden zweiten Ausführungsbeispiel dazu, die vom Planspiegel bzw. Funktionselement 210 zurückreflektierten Strahlenbündel von den kollinear zum Planspiegel propagierenden Strahlenbündeln zu trennen. Im ersten Ausführungsbeispiel diente das Aufspaltelement ferner zur Aufspaltung des von der Lichtquelle emittierten Strahlenbündels in das Mess- und das Referenzstrahlenbündel. Wie bereits oben erwähnt, erfolgt die Erzeugung von Mess- und Referenzstrahlenbündeln mit unterschiedlicher Frequenz im zweiten Ausführungsbeispiel durch eine geeignet ausgebildete Lichtquelle. Desweiteren besitzt das Aufspaltelement in beiden Ausführungsbeispielen die Funktion, das Mess- und das Referenzstrahlenbündel wieder zu überlagern. All diese Funktionalitäten könnten alternativ natürlich auf mehrere Aufspaltelemente aufgeteilt werden, d.h. es ist nicht zwingend, dass lediglich ein einziges Aufspaltelement vorgesehen wird.

Drittes Ausführungsbeispiel

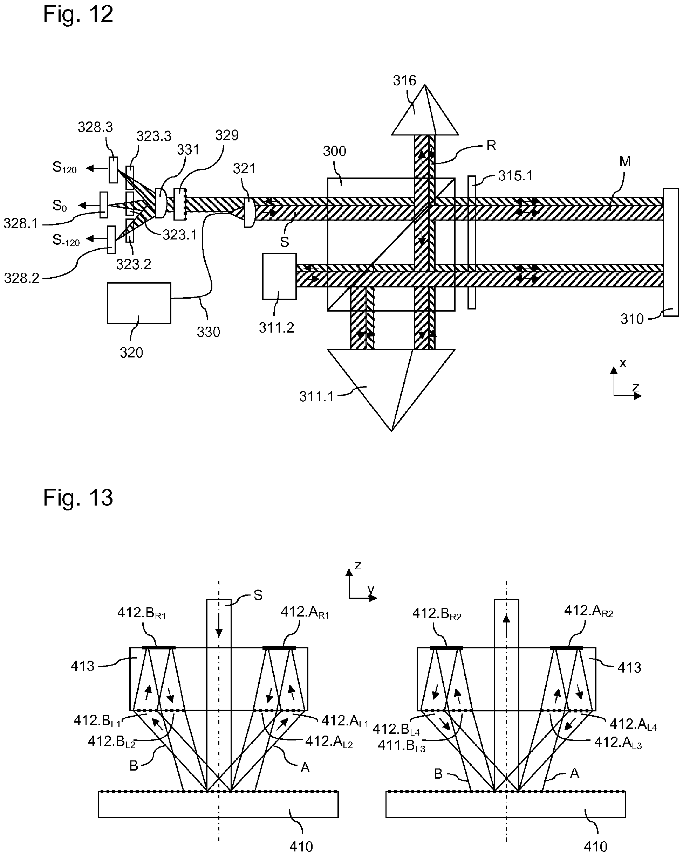

In Figur 12 ist ein als Planspiegel-Interferometer ausgebildetes, drittes Ausführungsbeispiel einer beispielhaften Messeinrichtung schematisiert dargestellt. Vorgesehen sind in dieser Variante nunmehr vier Reflexionen des Messstrahlenbündels M am Funktionselement 310 respektive Planspiegel und N = 3 Abbildungselemente. Ein erstes und ein drittes Abbildungselement sind hierbei gemeinsam in einem einzigen Abbildungselement 311.1 integriert ausgebildet, separat davon ist ein weiteres, zweites Abbildungselement 311.2 vorgesehen. Die beiden im Abbildungselement 311.1 integrierten Abbildungselemente weisen die Abbildungsfaktoren $m_1 = m_3 = -1$ auf und wirken wie ein Tripelprisma auf das darauf einfallende Messstrahlenbündel M; das weitere, zwei Abbildungselement 311.2 besitzt den Abbildungsfaktor $m_2 = +1$ und wirkt wie eine Gitter-Spiegel-Gitter-Kombination gemäß Figur 7a oder wie ein strahlversetzendes Reflexionsprisma gemäß Figur 7b auf das darauf einfallende Messstrahlenbündel.

Der Strahlengang verläuft in diesem Ausführungsbeispiel in zwei übereinander liegenden xz-Ebenen; die Strahlengänge in den unterschiedlichen Ebenen sind in Figur 12 jeweils mit unterschiedlichen Schraffuren und einem kleinem, nur der besseren Darstellung dienenden Strahlversatz gezeichnet. Tatsächlich liegen die entsprechenden Strahlengänge exakt übereinander.

Ein von einer Lichtquelle 320, z.B. ausgebildet als Laser, emittiertes Strahlenbündel S wird über eine Monomode-Faser 330 in der oberen Strahlengangebene dem Planspiegel-Interferometer zugeführt und durch eine Kollimationsoptik 321 kollimiert. Die Polarisationsrichtung dieses Strahlenbündels S steht unter 45° zu den beiden Achsen eines Aufspaltelements 300, das als polarisierender Strahlteiler ausgebildet ist. Das Strahlenbündel S wird darüber in ein Messstrahlenbündel M und in ein Referenzstrahlenbündel R aufgespalten. Anschließend propagiert das Messstrahlenbündel M über eine λ/4-Platte 315.1 zum Funktionselement 310 bzw. Planspiegel und wird nach der Rückreflexion und einem weiteren Durchtritt durch die λ/4-Platte 315.1 vom Aufspaltelement 300 in Richtung des Abbildungselements 311.1 abgelenkt. Das Abbildungselement 311.1 ist als Tripelprisma ausgebildet; ein erstes darin integriertes Abbildungselement bewirkt eine Abbildung des Messstrahlenbündels M und einen Versatz desselbigen in die untere Strahlengangebene. Dort wird das Messstrahlenbündel M erneut vom Aufspaltelement 300 bzw. dem polarisierenden Strahlteiler abgelenkt und trifft über die λ/4-Platte 315.1 ein zweites Mal auf den Planspiegel des Funktionselements 310. Nach einer erneuten Reflexion und einem weiteren Durchtritt durch die λ/4-Platte 315.1 gelangt es ohne Ablenkung durch das Aufspaltelement 300 auf das weitere Abbildungselement 311.2, das hier als Reflexionsprisma gemäß Figur 7b ausgebildet ist. Das Abbildungselement 311.2 bewirkt neben der Abbildung mit dem Abbildungsfaktor $m_2 = +1$ einen Versatz des Messstrahlenbündels M in die obere Strahlengangebene. Das Messstrahlenbündel M durchtritt im Folgenden das Aufspaltelement 300 wieder ohne Ablenkung und trifft über die λ/4-Platte 315.1 ein drittes Mal auf den Planspiegel des Funktionselements 310. Über die λ/4-Platte 315.1 gelangt es nach einer dritten Rückreflexion zurück zum Aufspaltelement 300, das es nun zum anderen Abbildungselement im Abbildungselement 311.1 ablenkt. Dieses Abbildungselement versetzt das Messstrahlenbündel M sodann wieder in die untere Strahlengangebene. Es wird erneut am Aufspaltelement 300 abgelenkt und propagiert über die λ/4-Platte 315..1 ein viertes Mal zum Funktionselement 310, respektive Planspiegel. Nach der vierten Rückreflexion und einem weiteren Durchtritt durch die λ/4-Platte 315.1 passiert das Messstrahlenbündel M schließlich das Aufspaltelement 300 ohne Ablenkung.

Das nach der Aufspaltung des Strahlenbündels S am Aufspaltelement 300 resultierende Referenzstrahlenbündel R wird über einen Referenz-Retroreflektor 316 in die untere Strahlengangebene versetzt und durch den polarisierenden Strahlteiler des Aufspaltelements 300 dem Messstrahlenbündel M nach der vierten Rückreflexion am Funktionselement 310 kollinear überlagert. Das Messstrahlenbündel M und das Referenzstrahlenbündel R sind dabei senkrecht zueinander polarisiert. Die überlagerten Strahlenbündel werden durch ein Gitter 329 in eine 0., +1. und -1. Beugungsordnung aufgeteilt und durch eine Linse 331 auf entsprechende Detektoren 328.1, 328.2, 328.3 einer Detektoranordnung fokussiert. Davor stehende Polarisatoren 323.1, 323.2, 323.3 erlauben in bekannter Weise die Einstellung einer Phasenverschiebung von jeweils 120° zwischen den erzeugten phasencodierten Messsignalen $S_0$, $S_{120}$ und $S_{-120}$.

Durch die Abbildungselemente 311.1, 311.2 ist auch in diesem Ausführungsbeispiel der erfindungsgemäßen Messeinrichtung sichergestellt, dass eine Verkippung des Funktionselements 310 weder zu einer Orts- noch zu einer Richtungs-Scherung zwischen den überlagerten Mess- und Referenzstrahlenbündeln M, R führt.

Viertes Ausführungsbeispiel

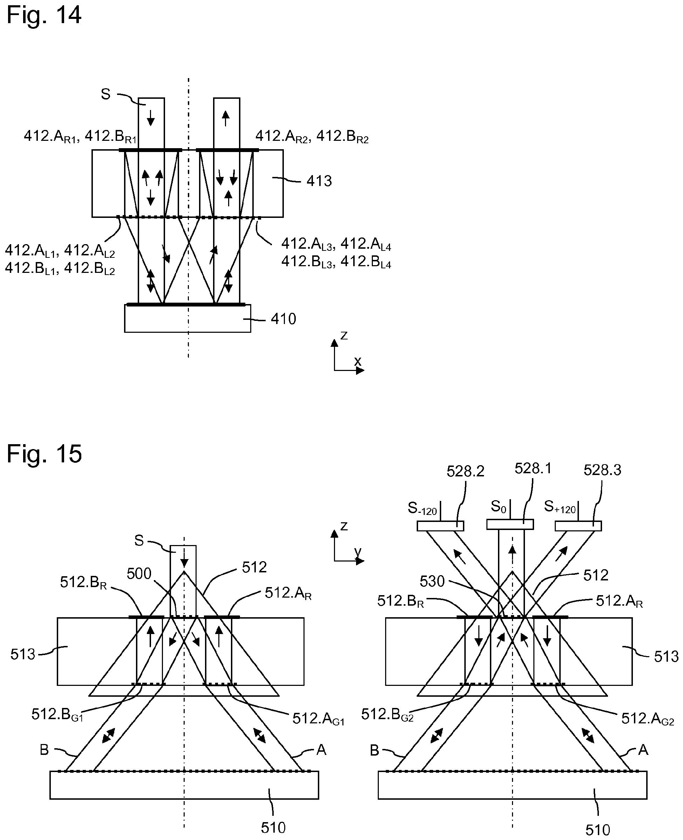

Ein viertes Ausführungsbeispiel einer erfindungsgemäßen Messeinrichtung ist in den Figuren 13 und 14 schematisiert dargestellt. Diese ist als interferentielle Positionsmesseinrichtung mit einer Maßverkörperung ausgebildet. In diesem Ausführungsbeispiel fungiert die Maßverkörperung als optisches Funktionselement 410, das von den zur Signalgewinnung genutzten Teilstrahlenbündeln A, B dreimal beaufschlagt wird, wobei jeweils eine Beugung der Teilstrahlenbündel A, B resultiert. Zwischen dem Beaufschlagen der Maßverkörperung werden von den Teilstrahlenbündeln A, B jeweils N = 2 Abbildungselemente durchlaufen.

Das Funktionselement 410 bzw. die Maßverkörperung ist hierbei mindestens entlang der Messrichtung y relativ zu den restlichen dargestellten Komponenten der Messeinrichtung beweglich. Mit Hilfe der erfindungsgemäßen Messeinrichtung werden Abtastsignale bezüglich der Relativposition des Funktionselements 410 entlang der Messrichtung y bestimmt.

Figur 13 zeigt links den Strahlengang eines einfallenden Strahlenbündels S und die nach der Aufspaltung resultierenden Strahlengänge der Teilstrahlenbündel A, B bis zum zweiten Beaufschlagen des Funktionselements 410, rechts ist in Figur 13 der Strahlengang der Teilstrahlenbündel A, B ab dem zweiten Beaufschlagen des Funktionselements 410 bis zum dritten Beaufschlagen desselbigen und der Wiedervereinigung der Teilstrahlenbündel A, B veranschaulicht. In Figur 14 ist der Abtaststrahlengang in einer anderen Ansicht dargestellt.

Das erste Abbildungselement, das vom Teilstrahlenbündel A nach der Aufspaltung des Strahlenbündels S am Funktionselement 410 durchlaufen wird, umfasst hierbei eine erste diffraktive Linse $412.A_{L1}$, einen ersten Spiegel $412.A_{R1}$ und eine zweite diffraktive Linse $412.A_{L2}$, die wie aus den Figuren ersichtlich auf der Ober- und Unterseite einer transparenten Planplatte 413 angeordnet sind. Eine dritte diffraktive Linse $412.A_{L3}$, ein zweiter Spiegel $412.A_{R2}$ und eine vierte diffraktive Linse $412.A_{L4}$ bilden das zweite Abbildungselement, das vom Teilstrahlenbündel A zwischen dem zweiten und dritten Beaufschlagen des Funktionselements 410 durchlaufen wird. Die beiden entsprechenden Abbildungselemente des Teilstrahlenbündels B bestehen analog hierzu aus einer ersten diffraktiven Linse $412.B_{L1}$, einem ersten Spiegel $412.B_{R1}$ und einer zweiten diffraktiven Linse $412.B_{L2}$ bzw. einer dritten diffraktiven Linse $412.B_{L3}$, einem zweiten Spiegel $412.B_{R2}$ und einer vierten diffraktiven Linse $412.B_{L4}$ auf der Ober- und Unterseite der Planplatte 413.

Der Abbildungsfaktor der ersten Abbildungselemente, die von den Teilstrahlenbündeln A, B zunächst durchlaufen werden, beträgt in Strichrichtung x des Funktionselements 410 bzw. der Maßverkörperung $m_{1x} = -2$ und in Messrichtung y $m_{1y} = +1$; der Abbildungsfaktor der zweiten Abbildungselemente beträgt in Strichrichtung x $m_{2x} = -1/2$ und in Messrichtung y $m_{2y} = +1$.

Das von einer nicht in den Figuren nicht gezeigten Lichtquelle, z.B. ein Laser, emittierte Strahlenbündel S wird am Funktionselement 410 bzw. der Maßverkörperung in eine +1. und -1. Beugungsordnung aufgespalten. Die +1. Beugungsordnung propagiert anschließend als Teilstrahlenbündel A durch das erste Abbildungselement, wird ein zweites Mal in +1. Beugungsordnung am Funktionselement 410 gebeugt und passiert dann das zweite Abbildungselement. Eine dritte Beugung in +1. Beugungsordnung am Funktionselement 410 lenkt das Teilstrahlenbündel A wieder entlang der optischen Achse z ab.

Der zur xz-Ebene symmetrische Strahlengang des Teilstrahlenbündels B wird durch die zugeordneten ersten und zweiten Abbildungselemente bestimmt; es resultier hierbei dreimal eine Beugung des Teilstrahlenbündels B in -1. Beugungsordnung am Funktionselement 410.

Beide Teilstrahlenbündel A und B werden bei der dritten Beugung am Funktionselement 410 kollinear ohne Strahlversatz überlagert und treffen auf eine nicht dargestellte Detektoranordnung, die entsprechende, phasencodierte Messsignale liefert. Ebenfalls nicht dargestellt sind aus Gründen der besseren Übersichtlichkeit in den Figuren Polarisationselemente wie Polarisatoren und λ/4- oder λ/2-Platten im Strahlengang der Teilstrahlenbündel A und B, die dazu dienen, sie zueinander orthogonal zu polarisieren.

Der besondere Vorteil dieser interferentiellen Positionsmesseinrichtung besteht darin, dass bei einer Moire-Kippung um eine Achse in z-Richtung keine Orts- und Richtungsscherungen der beiden Teilstrahlenbündel A, B zueinander auftreten und dadurch die Moire-Kipptoleranzen deutlich größer sind.

Fünftes Ausführungsbeispiel

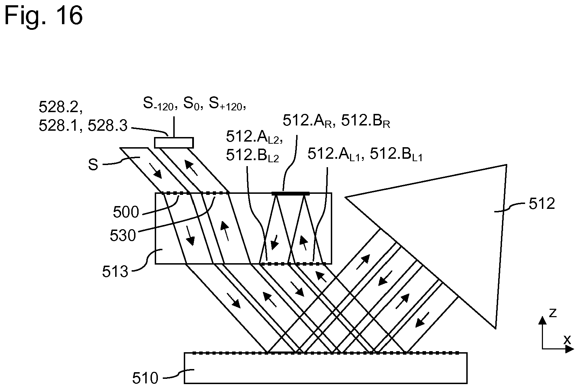

In den Figuren 15 und 16 ist analog zur Darstellung des vorhergehenden Ausführungsbeispiels ein fünftes Ausführungsbeispiel einer beispielhaften Messeinrichtung gezeigt, die wiederum als interferentielle Positionsmesseinrichtung mit einer Maßverkörperung ausgebildet ist. Das optische Funktionselement 510, d.h. die genutzte Maßverkörperung, wird nunmehr von den zur Signalgewinnung genutzten Teilstrahlenbündeln A, B viermal beaufschlagt bzw. gebeugt. Zwischen dem Beaufschlagen der Maßverkörperung werden von den Teilstrahlenbündeln A, B nunmehr jeweils N = 3 Abbildungselemente durchlaufen.

Als erstes und drittes, von den Teilstrahlenbündeln A, B durchlaufenes Abbildungselement 512 ist ein Tripelprisma vorgesehen, das die Abbildungsfaktoren $m_1 = m_3 = -1$ aufweist. Das durchlaufene zweite Abbildungselement für das Teilstrahlenbündel A besteht aus einer Kombination eines Gitters $512.A_{G1}$, eines Spiegels $512.A_R$ und eines Gitters $512.A_{G2}$, die auf der Ober- und Unterseite einer transparenten Planplatte 513 angeordnet sind. Analog hierzu umfasst das durchlaufene zweite Abbildungselement für das Teilstrahlenbündel B eine Kombination aus einem Gitter $512.B_{G1}$, einem Spiegels $512.B_R$ und einem Gitter $512.B_{G2}$ auf der Ober- und Unterseite der transparenten Planplatte 513. Die Abbildungsfaktoren dieser zweiten Abbildungselemente sind gemäß $m_2 = +1$ gewählt.

Ein einfallendes, in der xz-Ebene geneigtes Strahlenbündel wird durch ein Aufspaltelement 500, ausgebildet als Aufspaltgitter $G_1$ auf der Oberseite der Planplatte 513 mit der Gitterkonstante $d_1$, in eine -1. (Teilstrahlenbündel A) und +1. Beugungsordnung (Teilstrahlenbündel B) aufgespalten. Das Teilstrahlenbündel A propagiert zum Funktionselement 510, d.h. zur Maßverkörperung. Diese besitzt die Gitterkonstante $d_{MG} = ½ d_1$ und bewirkt eine erste Beugung des einfallenden Teilstrahlenbündels in die +1. Beugungsordnung. Anschließend durchläuft das Teilstrahlenbündel A das erste Abbildungselement 512 des Tripelprismas und erfährt darüber eine Retroreflexion und einen Strahlversatz in x-Richtung. Es wird daraufhin ein zweites Mal am Funktionselement 510 in +1. Beugungsordnung abgelenkt, durchläuft anschließend das zweite Abbildungselement und wird darüber abgebildet als auch in x-Richtung versetzt. Das Teilstrahlenbündel A propagiert erneut zum Funktionselement 510 respektive Maßverkörperung und wird ein drittes Mal in +1. Beugungsordnung gebeugt. Nach einer weiteren Retroreflexion und einem Strahlversatz in x-Richtung durch das dritte Abbildungselement 512 im Tripelprisma und einer vierten Beugung am Funktionselement in +1. Beugungsordnung gelangt das Teilstrahlenbündel A schließlich zu einem Vereinigungselement 530, ausgebildet als Vereinigungsgitter auf der Oberseite der Planplatte 513.

Der zur xz-Ebene symmetrische Strahlengang des Teilstrahlenbündels B trifft nach dem analogen Durchlaufen der drei zugeordneten Abbildungselemente und dem viermaligen Beaufschlagen des Funktionselements 510 auf dieselbe Stelle auf dem Vereinigungselement 530. Das entsprechende Vereinigungsgitter weist eine Gitterkonstante $d_4 = d_1$ auf, überlagert die beiden Teilstrahlenbündel A, B kollinear und bringt diese zur Interferenz. Durch eine geeignete Wahl der Phasentiefe und des Steg-zu-Periodenverhältnisses im Vereinigungsgitter des Vereinigungselements 530 treten drei resultierende Beugungsordnungen aus, die von den nachgeordneten Detektoren 528.1, 528.2, 528.3 der Detektoranordnung erfasst werden und zueinander um 120° phasenverschobene Messsignale $S_{-120}$, $S_0$ und $S_{+120}$ liefern.

Weitere Ausführungsformen

Neben den konkret beschriebenen Ausführungsbeispielen existieren im Rahmen der vorliegenden Erfindung selbstverständlich noch weitere Ausgestaltungsmöglichkeiten.

Bei den oben erläuterten ersten drei Ausführungsbeispielen der erfindungsgemäßen Messeinrichtung, die jeweils als Planspiegelinterferometer ausgebildet sind, wird durch die drei- oder mehrfache Beaufschlagung des Funktionselements respektive Planspiegels und durch die erfindungsgemäße Wahl der Abbildungsfaktoren das austretende Messstrahlenbündel in seinem Ort und seiner Richtung stabil gehalten, d.h. unabhängig von einer eventuellen Kippung des Planspiegels im Messarm. Bei einem Differenzial-Planspiegelinterferometer können die erfindungsgemäßen Maßnahmen auch auf den Strahlengang des Referenzstrahlenbündels übertragen werden. Auf diese Art und Weise kann das Referenzstrahlenbündel auch bei einer eventuellen Kippung des Funktionselements bzw. Planspiegels im Referenzarm orts- und richtungsstabil gehalten werden.

Die Verbindung mit dem zweiten Ausführungsbeispiel der erfindungsgemäßen Messeinrichtung erläuterte Übertragung der überlagerten Teilstrahlenbündel über Lichtleitfasern, insbesondere über Singlemode-Fasern, zu getrennten Detektoren kann auch in erfindungsgemäßen Messeinrichtungen vorgesehen werden, die als interferentielle Positionsmesseinrichtungen mit Maßverkörperung ausgebildet sind. D.h. auch hier kann eine entsprechende Übertragung der überlagerten Teilstrahlenbündel von der Abtasteinheit zu einer nachgeordneten Detektoranordnung über Lichtleitfasern, insbesondere über Singlemode-Fasern erfolgen. Voraussetzung dabei ist, dass das überlagerte Teilstrahlenbündel in der Strichrichtung x und in der Messrichtung y orts- und richtungsstabil gehalten werden. Während das bei einem erfindungsgemäßen Positionsmesseinrichtungen mit Transmissions-Maßverkörperungen in linearer Näherung gegeben ist, müssen beim Einsatz von Reflexions-Maßverkörperungen zusätzlich auch die Abbildungsfaktoren in Messrichtung gemäß den obigen Lösungen gewählt werden. Nur dann bleiben - neben der unterdrückten Orts- und Richtungsscherung - auch der Ort und die Richtung des überlagerten Teilstrahlenbündels unabhängig von einer eventuellen Kippung der Maßverkörperung.

**Patentansprüche**

1. Messeinrichtung zur hochpräzisen optischen Abstands- oder Positionsbestimmung mit einer Lichtquelle, mindestens einem optischen Funktionselement in Form eines Planspiegels und einer Detektoranordnung, Mitteln zur Erzeugung von mindestens zwei Teilstrahlenbündeln, von denen zumindest eines das Funktionselement drei Mal beaufschlagt, bevor die Teilstrahlenbündel interferierend überlagert in Richtung der Detektoranordnung propagieren, über die mindestens ein phasencodiertes Messsignal aus den überlagerten Teilstrahlenbündeln erzeugbar ist, **dadurch gekennzeichnet,**

   - **dass** das Teilstrahlenbündel (M) zwischen dem Beaufschlagen des optischen Funktionselements (10; 110; 210; 310) zwei Abbildungselemente (AE; 11.1 - 11.3; 11.n) durchläuft, wobei die Abbildungselemente (AE; 11.1 - 11.3; 11.n) Abbildungsfaktoren ($m_N$) dergestalt aufweisen, dass keine Orts- und Richtungsscherung der interferierenden Teilstrahlenbündel (M, R) bei einer Verkippung des optischen Funktionselements (10; 110; 210; 310) aus seiner Solllage resultiert und für die Abbildungsfaktoren ($m_n$) der N Abbildungselemente (AE; 11.1 - 11.3; 11.n; $12.1_A$ - $12.N_A$, $12.1_B$ - $12.N_B$) die folgende Bedingung gilt:

$$N = 2: \qquad m_1 = -2,\ m_2 = -\tfrac{1}{2}$$

   mit:

   $n := 1 \ldots N$
   $N :=$ Zahl der Abbildungselemente
   $m_n :=$ Abbildungsfaktor des n-ten Abbildungselements

   und
   - **dass** die Abbildungselemente (AE; 11.1 - 11.3; 11.n) derart ausgebildet sind, dass darüber ein Versatz der ausfallenden Teilstrahlenbündel (M) gegenüber den einfallenden Strahlenbündeln (M) resultiert.

2. Messeinrichtung zur hochpräzisen optischen Abstands- oder Positionsbestimmung mit einer Lichtquelle, mindestens einem optischen Funktionselement in Form einer Maßverkörperung und einer Detektoranordnung, Mitteln zur Erzeugung von mindestens zwei Teilstrahlenbündeln, von denen zumindest eines das Funktionselement drei Mal beaufschlagt, bevor die Teilstrahlenbündel interferierend überlagert in Richtung der Detektoranordnung propagieren, über die mindestens ein phasencodiertes Messsignal aus den überlagerten Teilstrahlenbündeln erzeugbar ist, **dadurch gekennzeichnet,**
   **dass** das Teilstrahlenbündel (A, B) zwischen dem Beaufschlagen des optischen Funktionselements (20; 410; 510) zwei Abbildungselemente ($12.1_A$ - $12.N_A$, $12.1_B$ - $12.N_B$) durchläuft, wobei die Abbildungselemente ($12.1_A$ - $12.N_A$, $12.1_B$ - $12.N_B$) Abbildungsfaktoren ($m_N$) dergestalt aufweisen, dass keine Orts- und Richtungsscherung der interferierenden Teilstrahlenbündel (A, B) bei einer Verkippung des optischen Funktionselements (20; 410; 510) aus seiner Solllage resultiert und für die Abbildungsfaktoren ($m_n$) der N Abbildungselemente (AE; 11.1 - 11.3; 11.n; $12.1_A$ - $12.N_A$, $12.1_B$ - $12.N_B$) die folgende Bedingung gilt:

$$N = 2: \qquad m_1 = -2,\ m_2 = -\tfrac{1}{2}$$

   mit:

   $n := 1 \ldots N$
   $N :=$ Zahl der Abbildungselemente
   $m_n :=$ Abbildungsfaktor des n-ten Abbildungselements.

3. Messeinrichtung nach Anspruch 1 oder 2, **dadurch gekennzeichnet, dass** die Abbildungselemente (AE; 11.1 - 11.3; 11n; $12.1_A$ - $12.N_A$, $12.1_B$ - $12.N_B$) als Kombination aus mindestens einer Linse und einem Spiegel ausgebildet sind.

4. Messeinrichtung nach Anspruch 3, **dadurch gekennzeichnet, dass** die mindestens eine Linse als diffraktive Linse ausgebildet ist.

5. Messeinrichtung nach Anspruch 3, **dadurch gekennzeichnet, dass** das Abbildungselement (AE; 11.1 - 11.3; 11.n; 12.1$_A$ - 12.N$_A$, 12.1$_B$ - 12.N$_B$) zwei Linsen umfasst, die unterschiedliche Brennweiten aufweisen und die derart angeordnet sind, dass ein auf die erste Linse einfallendes, kollimiertes Teilstrahlenbündel (M) nach dem Durchlaufen der zweiten Linse wiederum kollimiert weiterpropagiert.

6. Messeinrichtung nach mindestens einem der vorhergehenden Ansprüche, **dadurch gekennzeichnet, dass** die Aufspaltung in zwei Teilstrahlenbündel (M, R; A, B) über ein Aufspaltelement (100; 200; 300; 500) oder über die Lichtquelle (220; 320) erfolgt.

7. Messeinrichtung nach mindestens einem der vorhergehenden Ansprüche, **dadurch gekennzeichnet, dass** eine Übertragung der interferierend überlagerten Teilstrahlenbündel (M, R; A, B) zur nachgeordneten Detektoranordnung über ein oder mehrere Lichtleitfasern erfolgt.

8. Messeinrichtung nach Anspruch 1, **dadurch gekennzeichnet, dass** der Planspiegel im Messarm eines Interferometers angeordnet ist und eine dreimalige Beaufschlagung durch ein Messstrahlenbündel (M) erfährt.

9. Messeinrichtung nach Anspruch 8, **dadurch gekennzeichnet, dass** das Messstrahlenbündel (M) senkrecht auf den Planspiegel einfällt.

10. Messeinrichtung nach Anspruch 2, **dadurch gekennzeichnet, dass** die Maßverkörperung eine dreimalige Beaufschlagung durch zwei Teilstrahlenbündel (A, B) einer interferentiellen Positionsmesseinrichtung erfährt.

11. Messeinrichtung nach Anspruch 2, **dadurch gekennzeichnet, dass** die Abbildungselemente (12.1$_A$ - 12.N$_A$, 12.1$_B$ - 12.N$_B$) derart ausgebildet sind, dass darüber ein Versatz der ausfallenden Teilstrahlenbündel (A, B) gegenüber den einfallenden Teilstrahlenbündeln (A, B) resultiert.

**Claims**

1. Measurement device for highly precise optical distance or position determination with a light source, at least one optical functional element in the form of a plane mirror and a detector arrangement, means for producing at least two partial beams, at least one of which impinges on the functional element three times before the partial beams propagate, with interfering superposition, in the direction of the detector arrangement via which at least one phase-coded measurement signal is producible from the superposed partial beams,
**characterized**

- **in that** the partial beam (M) passes through two imaging elements (AE; 11.1 - 11.3; 11.n) between the impingement on the optical functional element (10; 110; 210; 310), wherein the imaging elements (AE; 11.1 - 11.3; 11.n) have imaging factors ($m_N$) such that no spatial and directional shear of the interfering partial beams (M, R) results in the case of tilting of the optical functional element (10; 110; 210; 310) out of its target orientation and the following condition applies for the imaging factors ($m_n$) of the N imaging elements (AE; 11.1 - 11.3; 11.n; 12.1$_A$ - 12.N$_A$, 12.1$_B$ - 12.N$_B$):

$$N = 2: \quad m_1 = -2, \quad m_2 = -1/2$$

with:

n := 1 ...N
N := number of the imaging elements
$m_n$ := imaging factor of the n-th imaging element

and
- **in that** the imaging elements (AE; 11.1 - 11.3; 11.n) are embodied such that a displacement of the reflected partial beams (M) with respect to the incident beams (M) is brought about thereby.

2. Measurement device for highly precise optical distance or position determination with a light source, at least one optical functional element in the form of a material measure and a detector arrangement, means for producing at least two partial beams, at least one of which impinges on the functional element three times before the partial beams propagate, with interfering superposition, in the direction of the detector arrangement via which at least one phase-coded measurement signal is producible from the superposed partial beams,
**characterized**
**in that** the partial beam (A, B) passes through two imaging elements ($12.1_A$ - $12.N_A$, $12.1_B$ - $12.N_B$) between the impingement on the optical functional element (20; 410; 510), wherein the imaging elements ($12.1_A$ - $12.N_A$, $12.1_B$ - $12.N_B$) have imaging factors ($m_N$) such that no spatial and directional shear of the interfering partial beams (A, B) results in the case of tilting of the optical functional element (20; 410; 510) out of its target orientation and the following condition applies for the imaging factors ($m_n$) of the N imaging elements (AE; 11.1 - 11.3 ; 11.n; $12.1_A$ - $12.N_A$, $12.1_B$ - $12.N_B$):

$$N = 2: \quad m_1 = -2, \quad m_2 = -1/2$$

with:

n:= 1 ...N
N := number of the imaging elements
$m_n$:= imaging factor of the n-th imaging element.

3. Measurement device according to Claim 1 or 2, **characterized in that** the imaging elements (AE; 11.1 - 11.3; 11.n; $12.1_A$ - $12.N_A$, $12.1_B$ - $12.N_B$) are embodied as a combination of at least one lens and one mirror.

4. Measurement device according to Claim 3, **characterized in that** the at least one lens is embodied as a diffractive lens.

5. Measurement device according to Claim 3, **characterized in that** the imaging element (AE; 11.1 - 11.3; 11.n; $12.1_A$ - $12.N_A$, $12.1_B$ - $12.N_B$) comprises two lenses having different focal lengths, which lenses are arranged such that a collimated partial beam (M) that is incident on the first lens propagates after passing through the second lens again in collimated fashion.

6. Measurement device according to at least one of the preceding claims, **characterized in that** the two partial beams (M, R; A, B) are split by way of a splitting element (100; 200; 300; 500) or by way of the light source (220; 320).

7. Measurement device according to at least one of the preceding claims, **characterized in that** a transfer of the partial beams (M, R; A, B) which are superposed in interfering fashion to the downstream detector arrangement is effected via one or more optical fibres.

8. Measurement device according to Claim 1, **characterized in that** the plane mirror is arranged in the measurement arm of an interferometer and undergoes three impingements by a measurement beam (M).

9. Measurement device according to Claim 8, **characterized in that** the measurement beam (M) is incident perpendicularly on the plane mirror.

10. Measurement device according to Claim 2, **characterized in that** the material measure undergoes three impingements by two partial beams (A, B) of an interferential position measurement device.

11. Measurement device according to Claim 2, **characterized in that** the imaging elements ($12.1_A$ - $12.N_A$, $12.1_B$ - $12.N_B$) are embodied such that a displacement of the reflected partial beams (A, B) with respect to the incident partial beams (A, B) is brought about thereby.

**Revendications**

1. Dispositif de mesure destiné à la détermination optique de haute précision d'un écart ou d'une position, comprenant une source de lumière, au moins un élément fonctionnel optique sous la forme d'un miroir plan et un arrangement détecteur, des moyens servant à générer au moins deux faisceaux de rayons partiels, parmi lesquels au moins l'un charge trois fois l'élément fonctionnel avant que les faisceaux de rayons partiels, superposés en interférence, se propagent en direction de l'arrangement détecteur, par le biais duquel peut être généré au moins un signal de mesure codé en phase à partir des faisceaux de rayons partiels superposés, **caractérisé en ce**

- **que** le faisceau de rayons partiel (M) traverse deux éléments de représentation (AE ; 11.1 - 11.3 ; 11.n) entre les charges de l'élément fonctionnel optique (10 ; 110 ; 210 ; 310), les éléments de représentation (AE ; 11.1 - 11.3 ; 11.n) possédant des facteurs de représentation ($m_N$) tels qu'aucun cisaillement de lieu et de direction des faisceaux de rayons partiels en interférence (M, R) ne résulte dans le cas d'un basculement de l'élément fonctionnel optique (10 ; 110 ; 210 ; 310) hors de sa position de consigne, et la relation suivante s'applique aux facteurs de représentation ($m_n$) des N éléments de représentation (AE ; 11.1 - 11.3 ; 11.n ; $12.1_A$ - $12.N_A$, $12.1_B$ - $12.N_B$) :

$$N = 2 \; : \; m_1 = -2, \; m_2 = -1/2$$

où :

n = 1 ... N
N = nombre d'éléments de représentation
$m_n$ = facteur de représentation du n-ème élément de représentation

et
- **que** les éléments de représentation (AE ; 11.1 - 11.3 ; 11.n) sont configurés de telle sorte qu'il en résulte un décalage des faisceaux de rayons partiels (M) émergents par rapport aux faisceaux de rayons (M) incidents.

2.  Dispositif de mesure destiné à la détermination optique de haute précision d'un écart ou d'une position, comprenant une source de lumière, au moins un élément fonctionnel optique sous la forme d'un étalon et un arrangement détecteur, des moyens servant à générer au moins deux faisceaux de rayons partiels, parmi lesquels au moins l'un charge trois fois l'élément fonctionnel avant que les faisceaux, de rayons partiels, superposés en interférence, se propagent en direction de l'arrangement détecteur, par le biais duquel peut être généré au moins un signal de mesure codé en phase à partir des faisceaux de rayons partiels superposés, **caractérisé en ce**

- **que** le faisceau de rayons partiel (A, B) traverse deux éléments de représentation ($12.1_A$ - $12.N_A$, $12.1_B$ - $12.N_B$) entre les charges de l'élément fonctionnel optique (20 ; 410 ; 510), les éléments de représentation ($12.1_A$ - $12.N_A$, $12.1_B$ - $12.N_B$) possédant des facteurs de représentation ($m_N$) tels qu'aucun cisaillement de lieu et de direction des faisceaux de rayons partiels en interférence (A, B) ne résulte dans le cas d'un basculement de l'élément fonctionnel optique (20 ; 410 ; 510) hors de sa position de consigne, et la relation suivante s'applique aux facteurs de représentation ($m_n$) des N éléments de représentation (AE ; 11.1 - 11.3 ; 11.n ; 12.1A - $12.N_A$, $12.1_B$ - $12.N_B$) :

$$N = 2 \; : \; m_1 = -2, \; m_2 = -1/2$$

où :

n = 1 ... N
N = nombre d'éléments de représentation
$m_n$ = facteur de représentation du n-ème élément de représentation.

3.  Dispositif de mesure selon la revendication 1 ou 2, **caractérisé en ce que** les éléments de représentation (AE ; 11.1 - 11.3 ; 11.n ; $12.1_A$ - $12.N_A$, $12.1_B$ - $12.N_B$) sont réalisés sous la forme d'une combinaison d'au moins une lentille et d'un miroir.

4.  Dispositif de mesure selon la revendication 3, **caractérisé en ce que** l'au moins une lentille est réalisée sous la forme d'une lentille diffractive.

5.  Dispositif de mesure selon la revendication 3, **caractérisé en ce que** l'élément de représentation (AE ; 11.1 - 11.3 ; 11.n ; $12.1_A$ - $12.N_A$, $12.1_B$ - $12.N_B$) comprend deux lentilles, lesquelles possèdent des distances focales différentes et sont disposées de telle sorte qu'un faisceau de rayons partiel (M) collimaté incident sur la première lentille poursuit sa propagation en étant de nouveau collimaté après avoir traversé la deuxième lentille.

6. Dispositif de mesure selon au moins l'une des revendications précédentes, **caractérisé en ce que** le dédoublement en deux faisceaux de rayons partiels (M, R ; A, B) s'effectue par le biais d'un élément de dédoublement (100 ; 200 ; 300 ; 500) ou par le biais de la source de lumière (220 ; 320).

7. Dispositif de mesure selon au moins l'une des revendications précédentes, **caractérisé en ce qu'**une transmission des faisceaux de rayons partiels (M, R ; A, B) superposés en interférence vers l'arrangement détecteur monté en aval s'effectue par le biais d'une ou plusieurs fibres optiques.

8. Dispositif de mesure selon la revendication 1, **caractérisé en ce que** le miroir plan est disposé dans le bras de mesure d'un interféromètre et subit une triple charge par un faisceau de rayons de mesure (M).

9. Dispositif de mesure selon la revendication 8, **caractérisé en ce que** le faisceau de rayons de mesure (M) est incident perpendiculairement sur le miroir plan.

10. Dispositif de mesure selon la revendication 2, **caractérisé en ce que** l'étalon subit une triple charge par deux faisceaux de rayons partiels (A, B) d'un dispositif de mesure de position interférentiel.

11. Dispositif de mesure selon la revendication 2, **caractérisé en ce que** les éléments de représentation ($12.1_A$ - $12.N_A$, $12.1_B$ - $12.N_B$) sont configurés de telle sorte qu'il en résulte un décalage des faisceaux de rayons partiels (A, B) émergents par rapport aux faisceaux de rayons partiels (A, B) incidents.

## FIG. 1a

STAND DER TECHNIK

## FIG. 1b

STAND DER TECHNIK

# FIG. 2

STAND DER TECHNIK

# FIG. 3

FIG. 4

FIG. 5

FIG. 6

FIG. 7a          FIG. 7b          FIG. 7c          FIG. 7d

FIG. 7e

FIG. 8

FIG. 9a

Fig. 9b

Fig. 9c

Fig. 10a

## FIG. 10b

## FIG. 11

## Fig. 12

## Fig. 13

**Fig. 14**

**Fig. 15**

## Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4693605 A
- US 5064289 A
- US 2004047027 A1
- US 2003053073 A